Europäisches Patentamt

(19) European Patent Office

Office européen des brevets

(11) Numéro de publication : **0 359 623 B1**

(12) **FASCICULE DE BREVET EUROPEEN**

(45) Date de publication du fascicule du brevet :
**27.11.91 Bulletin 91/48**

(51) Int. Cl.[5] : **B64C 27/54**

(21) Numéro de dépôt : **89402416.5**

(22) Date de dépôt : **05.09.89**

(54) **Dispositif de commande de pas monocyclique en repère fixe et multicyclique en repère tournant pour pales de rotors de giravions.**

(30) Priorité : **16.09.88 FR 8812141**

(43) Date de publication de la demande :
**21.03.90 Bulletin 90/12**

(45) Mention de la délivrance du brevet :
**27.11.91 Bulletin 91/48**

(84) Etats contractants désignés :
**DE GB IT**

(56) Documents cités :
**FR-A- 2 607 465**
**US-A- 3 102 597**
**US-A- 3 144 908**
**JOURNAL OF THE AMERICAN HELICOPTER SOCIETY, vol. 27, no. 3, juillet 1982, pages 25-31, New York, US; K.F. GUINN: "Individual blade control independent of a swashplate"**

(73) Titulaire : **AEROSPATIALE Société Nationale Industrielle**
**37, Boulevard de Montmorency**
**F-75781 Paris Cédex 16 (FR)**

(72) Inventeur : **Aubry, Jacques Antoine**
**2 Avenue Marie Gaspet**
**F-13480 Cabries (FR)**
Inventeur : **Mondet, Jean Joseph**
**839 Route de Lambesc**
**F-13390 Pelisanne (FR)**

(74) Mandataire : **Bérogin, Francis et al**
**c/o CABINET HARLE & PHELIP 21 rue de la Rochefoucauld**
**F-75009 Paris (FR)**

EP 0 359 623 B1

## Description

La présente invention concerne un dispositif de commande de pas monocyclique en repère fixe et de pas multicyclique en repère tournant,
pour les pales des rotors, en particulier principaux ou sustentateurs, des giravions ou, plus généralement, des aérodynes à voilure au moins partiellement tournante, tels que les hélicoptères et les aérodynes de types dits "convertibles" ou combinés".

Le dispositif selon l'invention est essentiellement destiné à l'équipement des rotors principaux d'hélicoptères et des hélices basculantes ou rotors basculants des aérodynes convertibles, qui sont des rotors à pas variable, afin de permettre la commande des pales de ces rotors de façon, d'une part, à assurer le pilotage classique du ou des rotors considérés par introduction du pas général ou collectif, qui est constant quel que soit l'azimut d'une pale donnée en rotation mais variable simultanément pour toutes les pales d'un rotor, et également du pas cyclique ou monocyclique, qui varie sinusoïdalement sur un tour de rotation de ladite pale, et, d'autre part, à pouvoir éventuellement surajouter aux variations du pas général et du pas monocyclique, une variation dynamique quelconque du pas pour assurer la commande multicyclique du ou des rotors considérés.

On sait que le pilotage des hélicoptères est obtenu, de manière classique, d'une part, par la commande du pas général des pales de chaque rotor principal, cette commande permettant de faire varier la portance d'ensemble du rotor, et, d'autre part, par la commande monocyclique du pas des pales de chaque rotor principal, permettant d'incliner le disque du rotor, la combinaison de ces deux commandes sur l'incidence de ces pales ayant comme résultat la possibilité de faire varier l'amplitude et l'inclinaison de l'effort moyen résultant développé par le rotor et, en conséquence, de piloter l'hélicoptère que ce rotor sustente.

Ces commandes classiques sont introduites, sur la plupart des hélicoptères qui volent à ce jour, par l'intermédiaire d'un dispositif complexe à plateaux cycliques, ces plateaux permettant d'engendrer simultanément sur les pales du rotor principal, d'une part, la commande du pas général des pales par le déplacement axial des plateaux cycliques suivant l'axe du rotor, et, d'autre part, la commande sinusoïdale du pas ou commande monocyclique, dont la pulsation est égale au régime de rotation du rotor, par le basculement angulaire de ces plateaux cycliques par rapport à l'axe du rotor.

Généralement, les plateaux cycliques, utilisés pour commander la variation du pas des pales d'un rotor de giravion tel qu'un hélicoptère, sont montés autour du mât rotor et comprennent un plateau tournant relié à sa périphérie par des biellettes aux leviers de commandes de pas des pales du rotor, et entraîné par le moyeu ou le mât du rotor, et par l'intermédiaire d'au moins un compas de liaison, en rotation autour de l'axe du mât rotor, ce plateau tournant étant monté en rotation à l'aide d'au moins un roulement à billes sur un plateau non-tournant, monté autour du mât rotor et coulissant axialement le long de ce dernier, sous l'action d'un levier de pas collectif manoeuvré par le pilote, le plateau non-tournant étant également articulé par rapport au mât rotor à l'aide d'une rotule, de sorte que les plateaux puissent osciller dans tous les sens autour de la rotule, par l'action de bielles des commandes pilote sur le plateau non-tournant, cette action étant commandée à partir du manche cyclique manoeuvré par le pilote.

Les modes de fonctionnement et de commande des pales des rotors principaux d'hélicoptères sont à l'origine d'excitations vibratoires très supérieures à celles relevées sur les avions de transport. La cause principale de ces excitations vibratoires élevées est le rotor principal des hélicoptères, sur lequel les vitesses aérodynamiques et les incidences variables induites sur les pales, au cours de leur rotation, en particulier en vol d'avancement, développent des efforts alternés importants, qui, après transmission au fuselage de l'hélicoptère par l'intermédiaire du moyeu, se traduisent par des accélérations périodiques élevées, surtout à grande vitesse de déplacement de l'hélicoptère. Ces vibrations sont d'autant plus élevées que la charge du rotor (masse, facteur de charge) et la vitesse d'avancement sont importantes. Ces vibrations ont pour conséquence principale de réduire le confort dans la cabine de l'hélicoptère, de provoquer une fatigue accrue de l'équipage, notamment lors de missions de longue durée, de développer des contraintes dynamiques élevées dans le moyeu et la structure de l'hélicoptère, ce qui provoque une fatigue du matériel et des équipements qui lui sont rattachés.

Indépendamment de l'optimisation dynamique des rotors et des structures, les moyens utilisés à ce jour pour limiter ces phénomènes vibratoires sont des moyens essentiellement passifs, du type anti-vibreur ou suspensions, disposés au niveau de la tête de rotor, au niveau de la liaison entre rotor et fuselage, ainsi que sur le fuselage lui-même. Parallèlement aux moyens passifs, dont l'avenir semble limité, du fait que leur masse risque d'être rédhibitoire pour satisfaire aux exigences de plus en plus sévères en matière de confort, associées aux vitesses de croisière de plus en plus élevées des hélicoptères modernes, des moyens actifs de contrôle des vibrations sont également étudiés et développés.

Comme cas particulier de ces moyens actifs de contrôle des vibrations, il a déjà été proposé d'utiliser une commande multicyclique, dont le principe d'action dans cette application, consiste à développer des efforts alternés qui, au niveau du rotor principal, s'oppose aux efforts générateurs de vibrations.

Par rapport à une commande de pas monocyclique, introduite par des plateaux cycliques, une commande multicyclique (ou harmonique) est une commande plus élaborée, contenant plusieurs harmoniques du régime de rotation. Il a, en outre, été déjà proposé d'utiliser une telle commande multicyclique non seulement pour diminuer les contraintes ou les régimes vibratoires, mais également pour rechercher l'amélioration des qualités de vol, pour reculer les limites du domaine de vol et obtenir des gains en performances, notamment par le contrôle du décrochage sur la ou les pales reculantes du rotor principal considéré.

Il a de plus été noté qu'une commande multicyclique du rotor principal d'un hélicoptère, en tant que système de contrôle actif des vibrations, se prête favorablement à une intégration dans un système de commandes de vol électriques, permettant d'assurer un contrôle automatique généralisé de l'hélicoptère.

Dans un premier mode connu de mise en oeuvre, il a été proposé d'introduire la commande multicyclique au niveau des bielles de commande du plateau non-tournant d'un dispositif classique à plateaux cycliques, de sorte que la commande multicyclique soit simplement ajoutée à la commande générale et monocyclique classique, correspondant à une constante en repère fixe, c'est-à-dire sans prendre en considération la rotation autour de l'axe du rotor. Une telle réalisation a pour seul intérêt de conserver la chaîne de commande monocyclique classique à plateaux cycliques et bielles de pas, à laquelle on rajoute des actionneurs linéaires multicycliques, tels que des vérins électrohydrauliques, appelés vérins "multicycliques", qui sont mis en série sur les servo-commandes classiques, à entrée mécanique, du déplacement longitudinal et de l'inclinaison du plateau non-tournant. Ainsi, par un choix judicieux de l'amplitude et de la phase des commandes envoyées sur les trois vérins multicycliques, on peut donc s'opposer à la génération des vibrations au niveau du rotor principal.

Par opposition à une telle superposition d'une commande monocyclique classique et d'une commande multicyclique, il a également été déjà proposé d'effectuer la commande multicyclique par une commande directe, en repère tournant, à l'aide de dispositifs d'actionnement qui tournent chacun avec une pale dont le pas est commandé.

Parmi les différentes réalisations de ce type, qui ont été présentées dans un article de Monsieur Kenneth F. GUINN, intitulé "Commande individuelle de pales indépendante d'un plateau cyclique" (Individual Blade Control Independant of a Swash-plate) et publié dans le numéro de Juillet 1982 du "Journal of American Helicopter Society", l'une comporte, pour chaque pale du rotor considéré, un actionneur linéaire monté à l'extérieur du mât rotor et le long de la partie supérieure de ce dernier, et articulé, par son extrémité supérieure, sur une attache tournant avec le mât rotor, et par son extrémité inférieure, sur un levier, tournant également avec le mât rotor et monté pivotant sur ce dernier autour d'un axe perpendiculaire à l'axe de ce mât. Ce levier pivotant, propre à chaque pale, est articulé, d'une part, sur l'extrémité supérieure d'une bielle inférieure de commande de pas, dont l'extrémité inférieure est entraînée avec le plateau tournant du dispositif à plateaux cycliques, et, d'autre part, sur l'extrémité inférieure d'une bielle supérieure de commande de pas, dont l'extrémité supérieure actionne le levier de commande du pas de la pale correspondante.

Cette réalisation, dans laquelle la commande multicyclique est appliquée en repère tournant par des actionneurs linéaires, qui sont des vérins hydrauliques, tournant avec le rotor autour de son axe et alimentés par des organes d'alimentation en puissance également entraînés en rotation avec le mât rotor et logés au moins partiellement dans ce dernier, a donc également pour avantage de conserver la chaîne de commande générale et monocyclique classique, avec ses plateaux cycliques et ses bielles de commande de l'inclinaison et de la translation du plateau non-tournant, la commande multicyclique étant appliquée en parallèle à la commande monocyclique sur la partie supérieure de cette chaîne de commande classique conservée.

Cependant, les deux réalisations de l'état de la technique plus précisément mentionnées ci-dessus présentent divers inconvénients, qui découlent du montage des actionneurs multicycliques respectivement au-dessous ou au-dessus des plateaux cycliques, et autour du mât rotor. Il en découle immédiatement des difficultés pour assurer de manière fiable leurs alimentations hydraulique et électrique, puisque ces actionneurs sont des vérins électro-hydrauliques, c'est-à-dire des vérins hydrauliques à double effet combinés à des servo-valves électro-hydrauliques de commande. Ces difficultés sont particulièrement marquées lorsque les vérins multicycliques sont montés en repère tournant et entraînés en rotation avec le rotor, puisqu'il faut, d'une part assurer la continuité des alimentations hydraulique et électrique aux interfaces entre des organes tournants liés au rotor et des organes non-tournants liés au fuselage de l'hélicoptère et, d'autre part, monter les différents organes rotatifs d'une telle installation de manière à garantir une excellente tenue mécanique de ces organes, soumis à la force centrifuge.

En outre, la présence des vérins multicycliques et des conduites d'alimentation en saillie autour du mât rotor et soit au-dessus soit au-dessous des plateaux cycliques a pour effet d'augmenter la trainée aérodynamique, soit entre les plateaux cycliques et le dessous du rotor, dans une mesure qui peut éventuellement perturber le rendement aérodynamique de la tête de rotor, soit entre les plateaux cycliques et la partie supérieure du fuselage, dans une mesure qui peut éventuellement perturber l'écoulement aérodynamique au niveau de l'entrée et/ou autour de la ou des turbines de l'hélicoptère.

Enfin, dans le cas de la réalisation précitée à vérins multicycliques en repère tournant, l'embiellage propre à chaque pale et constitué par les bielles inférieure et supérieure de commande de pas et par le levier oscillant sur le mât rotor et actionné par un vérin multicyclique correspondant, est un embiellage pénalisant non seulement en trainée, mais également en poids et en coût.

De plus, les articulations de cet embiellage, sollicitées par des efforts alternés importants à haute fréquence, peuvent être soumises à usure et introduire en conséquence des jeux incompatibles avec un fonctionnement correct de la commande multicyclique.

Le but de l'invention est de proposer un dispositif de commande de pas monocyclique en repère fixe et multicyclique en repère tournant, qui préserve l'avantage lié à la conservation de la chaîne de commande générale et monocyclique classique à plateaux cycliques, tout en remédiant aux inconvénients précités des dispositifs de ce type de l'état de la technique.

Un autre but de l'invention est de proposer un tel dispositif de commande de pas, dans lequel la reprise de la quasi totalité des efforts, notamment centrifuges, est assurée directement par un organe déjà présent dans ladite chaîne de commande générale et monocyclique classique, et disponible à cet effet en raison de son aptitude à un dimensionnement approprié.

Un autre but encore est de permettre de réaliser l'ensemble des organes de commande en aval des vérins de puissance avec un maximum de rigidité et d'éviter par ailleurs les risques d'apparition de jeux en service dans les articulations, le manque de rigidité et/ou la présence de jeux dans cette partie de la commande du rotor transmettant des efforts statiques et dynamiques élevés, pouvant y introduire en vol de graves perturbations vibratoires.

Un autre but encore de l'invention est de proposer un tel dispositif de commande de pas, dont l'encombrement et la trainée sont réduits par l'intégration de composants hydrauliques directement dans les plateaux cycliques.

Un autre but encore de l'invention est de proposer un tel dispositif de commande de pas, dans lequel l'utilisation de joints d'étanchéité dynamiques soit pratiquement limitée aux vérins hydrauliques équipant le dispositif, afin de simplifier la réalisation et la maintenance des circuits hydrauliques et d'en augmenter la fiabilité.

Un autre but enfin de l'invention est de proposer un tel dispositif de commande de pas qui soit d'une structure simplifiée et moins lourde que la réalisation connue à vérins multicycliques montés en repère tournant au-dessus des plateaux cycliques.

A cet effet, l'idée à la base de l'invention est d'intégrer directement dans les plateaux cycliques de la chaîne de commande générale et monocyclique classique le plus de fonctions possibles devant être remplies par les différents organes d'un tel dispositif de commande de pas monocyclique en repère fixe et multicyclique en repère tournant.

Les buts précités sont atteints grâce à l'invention, qui propose un dispositif de commande de pas monocyclique en repère fixe et multicyclique en repère tournant, pour les pales d'un rotor de giravion, et comprenant, pour assurer la commande de pas général et monocyclique en repère fixe, un ensemble à plateaux cycliques comportant :

— un plateau non-tournant, monté, d'une part, coulissant axialement autour d'un guide cylindrique fixe, solidaire de la structure du giravion et entourant sensiblement coaxialement le mât rotor, et, d'autre part, oscillant angulairement par une rotule sur l'axe du mât rotor,

— au moins un compas non-tournant, articulé, d'une part, sur ladite structure du giravion et, d'autre part, sur ledit plateau non-tournant,

— au moins trois actionneurs de commandes pilotes, dont chacun est relié, d'une part, à ladite structure du giravion, et, d'autre part, au dit plateau non-tournant, afin de commander les mouvements de translation et de basculement dudit plateau non-tournant respectivement le long dudit guide et sur ladite rotule,

— un plateau tournant, monté en rotation par au moins un roulement sur ledit plateau non-tournant, et sensiblement coaxialement à ce dernier,

— au moins un compas tournant, articulé, d'une part, sur ledit plateau tournant, et, d'autre part, sur ledit rotor, et

— des bielles de commande de pas, en nombre égal aux pales du rotor, et dont chacune est reliée, d'une part, audit plateau tournant et, d'autre part, à un levier de commande de pas d'une pale correspondante du rotor,

le dispositif comprenant également, pour assurer la commande de pas multicyclique en repère tournant, des actionneurs linéaires multicycliques, en nombre égal aux pales du rotor, disposés à l'extérieur du mât rotor et sensiblement longitudinalement par rapport à l'axe de ce dernier, et montés tournant avec le rotor autour du dit axe du mât rotor, de sorte que chaque actionneur multicyclique actionne une bielle de commande de pas d'une pale correspondante du rotor, le dispositif de commande de pas selon l'invention se caractérisant en ce que l'actionneur linéaire multicyclique de chaque pale est un vérin hydraulique à double effet à au moins un corps, implanté sur ledit plateau tournant par l'un des deux éléments que constituent son cylindre et sa tige,

tandis que l'autre élément du vérin est directement articulé sur ladite bielle de commande de pas de la pale correspondante, chaque corps dudit vérin étant alimenté à partir d'au moins un circuit hydraulique de puissance par l'intermédiaire d'au moins une servo-valve électro-hydraulique de commande.

Il est clair que l'implantation des vérins multicycliques dans le plateau tournant a pour effet d'améliorer la tenue mécanique de ces constituants soumis à la force centrifuge, par la reprise des efforts s'exerçant sur le vérin multicyclique directement dans le carter du plateau tournant.

Avantageusement, afin de diminuer l'encombrement, et donc la trainée aérodynamique, et afin d'améliorer l'alimentation hydraulique des vérins multicycliques tournants, chacun de ces derniers est intégré par son cylindre dans le plateau tournant et articulé directement par sa tige à la bielle de commande de pas correspondante.

Une alimentation hydraulique avantageuse des vérins multicycliques sera assurée si, de plus, conformément à l'invention, chaque servo-valve de commande d'un vérin multicyclique est également montée en repère tournant et supportée par le plateau tournant.

Avantageusement, dans ce cas, au moins une servo-valve de commande d'un vérin multicyclique est accolée au cylindre au vérin multicyclique qu'elle commande, ou bien encore intégrée dans ou rapportée sur le plateau tournant, ce qui permet de diminuer au maximum la longueur des canalisations hydrauliques de liaison entre les servo-valves et les vérins qu'elles commandent, et ce qui permet également d'intégrer ces canalisations directement dans le plateau tournant, de sorte qu'il n'est pas nécessaire de les réaliser à l'aide de tuyauteries rapportées sur le dispositif à plateaux cycliques, et de sorte également que la trainée aérodynamique d'ensemble et la vulnérabilité, vis-à-vis de phénomènes extérieurs au dispositif à plateaux cycliques ainsi que vis-a-vis de la force centrifuge, sont considérablement diminuées.

Quelle que soit la disposition adoptée pour le montage des servo-valves de commande vis-à-vis des vérins multicycliques, il est toujours avantageux, pour les raisons précitées, qu'au moins une servo-valve, mais de préférence chacune d'elles, soit reliée au vérin multicyclique qu'elle commande par des canalisations hydrauliques formées au moins partiellement, mais de préférence totalement, par des canaux percés dans le plateau tournant.

Afin d'améliorer encore la reprise de l'intégralité des efforts directement dans le carter du plateau tournant et/ou du plateau non-tournant, tout en assurant une alimentation hydraulique convenable des vérins multicycliques et des servo-valves montés en repère tournant, il est avantageux que ces servo-valves de commande des vérins multicycliques soient alimentées en fluide hydraulique à partir d'au moins un circuit hydraulique de puissance par l'intermédiaire d'au moins un collecteur hydraulique essentiellement logé dans les plateaux cycliques tournant et non-tournant.

Avantageusement, ce collecteur hydraulique est en communication avec les servo-valves de commande des vérins multicycliques par des canalisations hydrauliques, formées au moins partiellement, mais de préférence totalement, par des canaux ménagés dans le plateau tournant. Comme précédemment, cette mesure permet d'éviter le montage de conduites souples ou rigides, rapportées sur le plateau tournant, et diminue la trainée aérodynamique de l'ensemble ainsi que la vulnérabilité, grâce à l'intégration des canaux d'alimentation hydraulique dans le carter du plateau tournant.

On peut bénéficier des mêmes avantages au niveau du plateau non-tournant, par le fait que le collecteur hydraulique est en communication avec au moins un circuit hydraulique de puissance du giravion par des canalisations hydrauliques formées au moins partiellement par des canaux ménagés dans le plateau non-tournant, l'une au moins de ces canalisations, et éventuellement chacune de deux canalisations, dont l'une assure l'alimentation à haute pression et l'autre le retour à basse pression, étant reliée à un bloc hydraulique d'alimentation à haute pression et/ou de retour à basse pression, qui est fixé sur la structure du giravion.

Selon une caractéristique avantageuse, pour assurer une intégration maximale des composants du dispositif dans les plateaux cycliques, le collecteur hydraulique est annulaire et intercalé entre lesdits plateaux tournant et non-tournant, dans l'un au moins desquels ce collecteur est partiellement intégré.

Avantageusement, pour faciliter l'intégration du collecteur hydraulique dans les plateaux cycliques tout en garantissant un montage en rotation favorable pour le plateau tournant et pour tout organe rotatif du collecteur hydraulique, ce dernier est implanté entre deux roulements espacés axialement autour du mât rotor, et par lesquels ledit plateau tournant est monté en rotation sur ledit plateau non-tournant.

Cette disposition se prête avantageusement à l'utilisation d'un collecteur hydraulique qui est du type comportant un joint rotatif de transfert de fluide hydraulique sous haute pression entre deux pièces sensiblement coaxiales, entraînées en rotation relative l'une dans l'autre, dont l'une est solidaire en rotation du plateau tournant et l'autre du plateau non-tournant.

De plus, le joint rotatif de transfert avantageusement utilisé est du type comportant deux organes annulaires de révolution sensiblement coaxiaux, dont l'un est en contact radial avec le plateau non-tournant par deux joints d'étanchéité statique, axialement espacés de part et d'autre d'une rainure de distribution de révolution sur cet organe, et en regard d'une rainure de distribution du plateau non-tournant, dans laquelle débouche au moins un canal interne à ce dernier et en communication avec une canalisation d'alimentation à haute pression, l'autre organe du joint rotatif de transfert étant en contact radial avec le plateau tournant, également par deux joints d'étanchéité statique axialement espacés de part et d'autre d'une rainure de distribution de révolution sur cet autre organe, et en regard d'une rainure de distribution du plateau tournant, dans laquelle débouche au moins un canal interne à ce dernier, pour l'alimentation à haute pression d'au moins une servo-valve de commande d'un vérin multicyclique, l'un des deux organes du joint rotatif de transfert entourant, avec un faible jeu radial, une partie axiale de l'autre organe et portant une couronne de révolution en saillie axiale et radiale par rapport à l'organe qui la porte, et engagée avec du jeu dans une gorge de révolution ménagée dans l'autre organe, en formant, en regard des deux organes et entre ces derniers, des fentes d'étanchéité radiales et coplanaires, s'étendant de part et d'autre d'une rainure de transfert de distribution, également de révolution, ménagée dans l'autre organe et en communication avec l'autre rainure de distribution de cet autre organe par au moins un canal interne à ce dernier, tandis que la couronne est percée d'un canal de transfert, débouchant à une extrémité, en regard de ladite rainure de transfert de distribution, et, à l'autre extrémité, en regard d'un canal percé dans l'organe portant la couronne et en communication avec l'autre rainure de distribution de cet organe. On peut ainsi bénéficier des nombreux avantages propres à ce type connu de joint rotatif de transfert de fluide hydraulique entre deux pièces en rotation relative l'une dans l'autre, ces avantages étant plus particulièrement qu'un tel type de joint de transfert travaille en frottements visqueux, en assurant de très faibles couples de frottement à grandes vitesses de rotation et hautes pressions de transfert, que les fentes d'étanchéité co-planaires peuvent être maintenues à des valeurs prédéterminées, et donc les organes du joint dans des positions prédéterminées, par un asservissement hydrostatique tolérant un jeu radial relativement important et un certain défaut d'alignement ou voilage entre le plateau non-tournant et le plateau tournant, que le dégagement de chaleur d'un tel joint de transfert en fonctionnement est relativement réduit, que les débits de fuite entre les deux organes en rotation relative du joint de transfert sont limités, que les contacts et les étanchéités entre les organes du joint de transfert rotatif et les plateaux tournant et non-tournant sont uniquement assurés par des joints d'étanchéité statique, de sorte que l'utilisation de joints d'étanchéité dynamique est limitée aux vérins du dispositif, et que la fiabilité est améliorée et la maintenance facilitée.

Avantageusement de plus, pour simultanément faciliter la réalisation de la canalisation hydraulique de retour à basse pression entre les servo-valves de commande des vérins multicycliques et au moins un circuit hydraulique du giravion, et la recirculation des débits de fuite du collecteur hydraulique, ce dernier comprend une chambre d'extrémité inférieure, délimitée entre les plateaux tournant et non-tournant, pour la récupération du débit de fuites du collecteur et dans laquelle débouchent, d'une part au moins un canal interne au plateau tournant et en communication avec le retour basse pression d'au moins une servo-valve de commande, et, d'autre part, au moins un canal interne au plateau non-tournant et en communication avec une canalisation de retour basse pression du ou des circuits hydrauliques du giravion.

Dans ce cas, au moins un canal de retour basse pression et interne au plateau non-tournant est avantageusement raccordé de manière étanche à une conduite de retour de gros diamètre, souple, externe au plateau non-tournant, et raccordant ledit plateau non-tournant au bloc hydraulique solidaire de la structure du giravion, pour assurer une bonne détente de ce fluide hydraulique de retour des servo-valves de commande.

Une intégration plus complète du dispositif dans la chaîne de commande de pas classique conservée est avantageusement assurée si, de plus, au moins un canal interne au plateau non-tournant et d'alimentation sous haute pression du collecteur hydraulique est raccordé de manière étanche à au moins un circuit hydraulique par l'intermédiaire d'au moins un canal interne au compas non-tournant.

Dans ce cas, il est avantageux, pour simplifier le montage, que la branche supérieure du compas non-tournant soit une bielle montée pivotante par une extrémité autour d'un pivot de liaison à la branche inférieure de ce compas non-tournant, l'autre extrémité de la bielle étant conformée en rotule articulée dans un siège sphérique du plateau non-tournant, la bielle étant de plus percée d'un canal interne longitudinal en communication, d'un côté avec un canal interne au pivot et alimenté en fluide hydraulique sous haute pression à partir d'au moins un circuit hydraulique de puissance, le canal interne de la bielle traversant la rotule, de l'autre côté, et débouchant en regard d'un canal interne au plateau non-tournant et s'ouvrant dans le fond du siège sphérique de ce plateau.

Afin d'améliorer encore l'intégration du dispositif dans les composants constituant la chaîne de commande de pas classique conservée, la branche inférieure du compas non-tournant est de plus avantageusement conformée en levier double, comportant deux bielles rigidement liées l'une à l'autre et montées simultanément pivotantes par leurs extrémités et autour de deux axes parallèles l'un à l'autre et perpendiculaires à l'axe du mât rotor, d'un côté sur le pivot de liaison à la branche supérieure de ce compas non-tournant, et de l'autre côté sur un pivot de liaison à la structure du giravion, le canal interne du pivot de liaison à la branche supérieure étant alimenté en fluide hydraulique sous haute pression par au moins un canal interne et longitudinal, ménagé dans l'une au moins des deux bielles du levier double, et lui-même en communication avec un canal interne au pivot de liaison à la structure, et qui est alimenté en fluide hydraulique sous haute pression à partir du bloc hydraulique solidaire de la structure.

De manière simple, le raccordement hydraulique entre ce bloc hydraulique et le canal interne au pivot de liaison à la structure peut être assuré par au moins une conduite hydraulique externe, raccordée avec étanchéité sur au moins une extrémité axiale de ce pivot de liaison dans laquelle débouche le canal interne à ce pivot.

Les actionneurs de commande pilote peuvent être, de manière bien connue, trois servo-commandes classiques, à entrée mécanique, dont le tiroir de chacune est relié à au moins un circuit hydraulique du giravion et est commandé par des bielles reliées à travers une timonerie convenable aux manches de commande de pas cyclique et de pas général qui sont à la disposition du pilote. Mais, selon une mesure technique propre à l'invention, il est avantageux que chacun des actionneurs de commande pilote soit un vérin monocyclique linéaire, hydraulique à double effet et à au moins un corps, qui est relié par son cylindre à la structure du giravion et par sa tige au plateau non-tournant, et qui est commandé par au moins une servo-valve non-tournante, solidaire du cylindre dudit vérin monocyclique correspondant et reliée par des conduits hydrauliques non-tournantes au bloc hydraulique de raccordement à au moins un circuit hydraulique de puissance du giravion.

Pour des raisons de sécurité, il est de plus avantageux que chaque vérin multicyclique et, le cas échéant, chaque vérin monocyclique, soit alimenté en fluide hydraulique à partir d'au moins un circuit hydraulique de puissance principal et d'un circuit hydraulique de secours, qui sont montés sur le giravion et couplés l'un à l'autre par au moins un clapet automatique de commutation entre les circuits, ce clapet étant monté en repère fixe en amont du ou des collecteurs hydrauliques, de sorte que la commutation du raccordement au circuit hydraulique de secours soit automatiquement assurée en cas de panne dans le circuit hydraulique principal.

Pour commander le pas de chaque pale, il est également avantageux d'assurer une redondance de la commande, afin d'améliorer la sécurité, et ceci peut être assuré par le fait que chaque vérin multicyclique est un vérin double corps à deux étages en tandem, dont chaque étage est commandé par l'une respectivement de deux servo-valves de commande correspondantes, dont chacune est alimentée par l'un respectivement de deux collecteurs hydrauliques superposés, et chacun en communication avec l'un respectivement de deux circuits hydrauliques de puissance principaux du giravion.

Avantageusement enfin, chaque servo-valve de commande du vérin multicyclique de chaque pale du rotor est elle-même commandée par des ordres provenant d'au moins un collecteur électrique et/ou optique, monté en repère tournant dans le mât rotor, ces ordres étant élaborés à partir de signaux délivrés par au moins un capteur de la position angulaire de la pale correspondante autour de son axe de changement de pas, de sorte que la position angulaire de chaque pale soit convenablement déterminée par une boucle d'asservissement de cette position angulaire.

L'invention sera mieux comprise, et d'autres avantages et caractéristiques de l'invention ressortiront à la lecture de la description donnée ci-dessous, à titre non limitatif, d'exemples de réalisation décrits en référence aux dessins annexés sur lesquels :

— la figure 1 est une vue schématique en coupe axiale d'une tête de rotor principal d'hélicoptère avec son mât rotor et équipé d'un dispositif de commande de pas selon l'invention,

— la figure 2 est une vue en coupe axiale d'un autre exemple de dispositif de commande de pas selon l'invention, monté de manière analogue autour du mât d'un rotor principal d'hélicoptère,

— la figure 3 est une vue en coupe brisée selon III-III du compas non-tournant du dispositif de la figure 2,

— la figure 4 est une vue partielle en élévation latérale du dispositif et selon la flèche F de la figure 2 et,

— la figure 5 est une coupe diamétrale partielle et schématique du collecteur hydraulique du dispositif des figures 2 à 4.

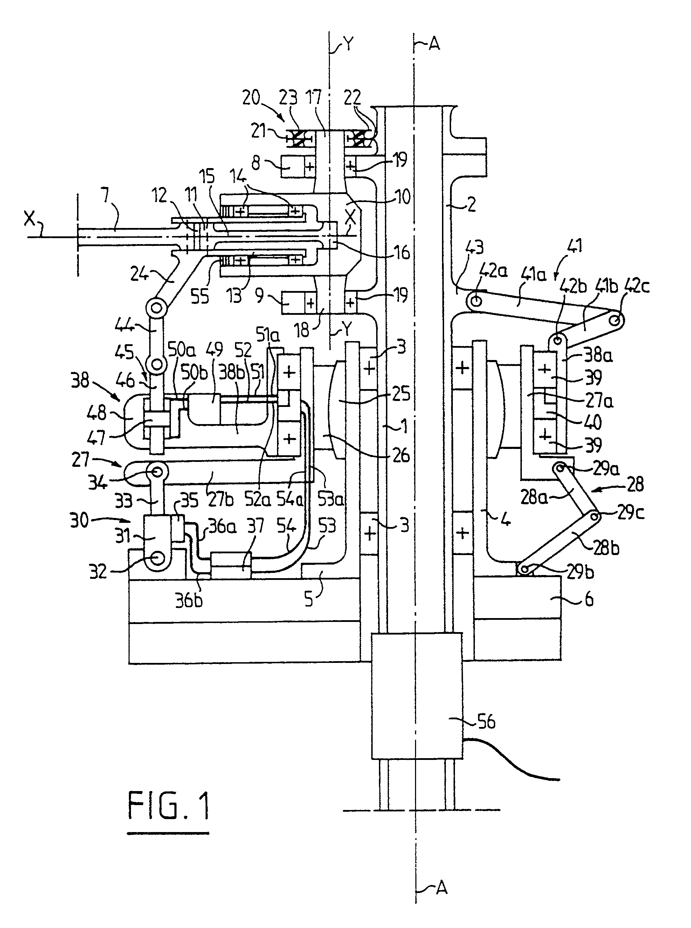

Le rotor principal d'hélicoptère représenté sur la figure 1 comprend un mât rotor tubulaire 1, qui est solidaire par son extrémité supérieure d'un moyeu 2 et, monté en rotation par deux roulements 3, décalés longitudinalement par rapport à l'axe A du mât rotor 1, c'est-à-dire par rapport à l'axe de rotation du rotor, à l'intérieur d'un manchon de guidage 4, cylindrique, tubulaire et coaxial, fixé par une bride radiale externe 5 de son extrémité inférieure sur la structure 6 de l'hélicoptère, à la partie supérieure du fuselage de ce dernier.

Par son extrémité inférieure, le mât rotor 1 est solidaire en rotation de l'arbre de sortie de la boîte de transmission principale (non représentée) de l'hélicoptère, qui est également supportée par la structure dans la partie supérieure du fuselage, de sorte que le mât rotor 1 et le moyeu 2 sont entraînés en rotation autour de l'axe A au-dessus du fuselage de l'hélicoptère.

Pour chacune des pales 7 du rotor, le moyeu 2 comprend deux plateaux radiaux supérieur 8 et inférieur 9, qui sont superposés et espacés axialement l'un de l'autre pour loger entre eux un manchon 10 de liaison de la pale 7 correspondante au moyeu 2. Le pied 11 de chaque pale 7 est retenu par deux broches diamétrales 12, perpendiculaires à l'axe longitudinal de la pale 7, dans un fourreau cylindrique 13, qui est monté coaxial et en rotation autour de son axe X-X dans l'alésage radial, par rapport à l'axe A, du manchon 10, grâce à deux roulements 14 décalés l'un de l'autre le long de l'axe X-X, et le pied 11 de la pale 7 est prolongé radialement vers l'axe A par un bras flexible et torsible 15, traversant axialement le fourreau 13 et dont l'extrémité radiale interne 16 est retenue dans le fond du manchon 10, autour d'un axe confondu avec l'axe de traînée Y-Y, parallèle à l'axe A du rotor, et autour duquel le manchon 10, et donc aussi le fourreau 13 et la pale 7 avec son pied 11 et son bras flexible et torsible 15, sont montés en rotation dans les plateaux supérieur 8 et inférieur 9 par des tourillons supérieur 17 et inférieur 18, solidaires du manchon 10 et engagés dans deux roulements 19 montés dans ces plateaux 8 et 9.

Les oscillations angulaires de la pale 7 et de son manchon 10 en traînée autour de l'axe Y-Y sont amorties et un rappel élastique vers une position initiale de repos de la pale 7 est assuré par un amortisseur de traînée 20, qui est, par exemple, du type comprenant une plaque métallique rigide et centrale 21, retenue sur le moyeu 2 et reliée par des couches d'élastomère visco-élastique 23 à chacune de deux plaques métalliques rigides et externes 22, entre lesquelles la plaque centrale 21 est intercalée, et qui sont retenues sur le manchon 10, par exemple au niveau du tourillon supérieur 17.

Chaque pale 7 est flexible en battement, de sorte qu'il est inutile de prévoir une articulation de battement au niveau de la liaison du manchon 10 au moyeu 2.

Enfin, les changements d'incidence de chaque pale 7 par rotation autour de son axe de changement de pas, confondu avec l'axe X-X du fourreau 13, sont permis par la rotation de ce fourreau 13 avec le pied de pale 11 dans le manchon 10, et par la déformation en torsion du bras de liaison 15, qui assure également un rappel vers une position initiale de la pale autour de son axe de pas X-X. Les changements de pas sont introduits sur la pale 7 par un levier de commande de pas 24 solidaire de l'extrémité radiale externe du fourreau 13 et en saillie vers le bas et latéralement sur ce fourreau 13.

Les changements de pas sont commandés par un dispositif de commande de pas monocyclique en repère fixe et multicyclique en repère tournant, qui intègre les composants essentiels d'une chaîne de commande de pas classiques à plateaux cycliques. Ce dispositif de commande de pas comprend, en plus du manchon de guidage 4, un coulisseau à rotule 25 annulaire, monté coaxial et coulissant axialement par son alésage cylindrique central autour du manchon de guidage 4, et dont la face latérale externe en forme de calotte sphérique convexe coopère avec la surface latérale interne concave, de forme correspondante, d'un support annulaire 26 coaxial et ainsi monté oscillant dans n'importe quelle direction par rapport à l'axe A sur le coulisseau à rotule 25. Ce support oscillant 26 est solidaire de la partie axiale 27a d'un plateau annulaire 27 qui l'entoure et de section transversale sensiblement en forme de L, dont la partie radiale 27b est reliée à la structure 6 de l'hélicoptère, d'une part par un compas non-tournant 28, et d'autre part, par trois actionneurs de commande pilote 30, dont un seul, en position centrale et vers l'avant, est représenté sur la figure 1, tandis que chacun des deux autres est décalé latéralement de 120 degrés par rapport à l'actionneur central 30 et de chaque côté de ce dernier.

La branche supérieure 28a du compas non-tournant 28 est montée pivotante à son extrémité supérieure et par le pivot 29a sur l'arrière de la partie radiale 27b du plateau 27, tandis que la branche inférieure 28b de ce compas 28 est montée pivotante à son extrémité inférieure et par un pivot 29b dans une chape d'attache à l'extrémité arrière de la bride radiale 5 fixée à la structure 6, et que les deux branches 28a et 28b du compas 28 sont montées pivotantes l'une sur l'autre par un pivot 29c, les axes des pivots 29a, 29b et 29c étant parallèles l'un à l'autre et perpendiculaires au plan radial passant par l'axe A et le plan médian des branches de ce compas 28. De la sorte, le compas non-tournant 28 retient le plateau 27 contre toute rotation autour de l'axe A, sans gêner les translations axiales ni les oscillations angulaires du plateau non-tournant 27 respectivement avec le coulisseau 25 le long du guide 4 et avec le support oscillant 26 sur le coulisseau à rotule 25, ces translations et oscillations étant commandées par les actionneurs de commande pilote 30.

Ces actionneurs peuvent être des servo-commandes classiques, dont les tiroirs sont, d'une part, directement alimentés en fluide hydraulique sous pression par le ou les circuits hydrauliques de puissance de l'hélicoptère, et, d'autre part, commandés par des bielles reliées par une timonerie aux manches de commande de pas cyclique et général à la disposition du pilote.

Mais, dans cet exemple, chaque actionneur 30 est un vérin électro-hydraulique et monocyclique, constitué d'un vérin linéaire sensiblement vertical, hydraulique à double effet et simple corps, dont le cylindre 31 est monté pivotant par son extrémité inférieure sur la structure 6, autour d'un pivot 32, et dont la tige 33 est montée pivotante par son extrémité supérieure sur le plateau non-tournant 27, autour d'un pivot 34, les axes des pivots 32 et 34 étant parallèles l'un à l'autre et perpendiculaires au plan radial passant par l'axe A et par l'axe du vérin 30, et une servo-valve 35 de commande de ce vérin est accolée à son cylindre 31. La servo-valve 35 du vérin monocyclique non-tournant 30 est reliée par des conduites hydrauliques non-tournantes 36a et 36b respectivement à l'étage d'alimentation hydraulique à haute pression et à l'étage de retour en fluide hydraulique à basse pression d'un bloc hydraulique 37, fixé sur la structure 6 et raccordé à l'un ou l'autre d'un circuit hydraulique de puissance principal et d'un circuit hydraulique de secours de l'hélicoptère (non représentés) par un clapet automatique de commutation, également logé dans le bloc 37, et assurant ainsi, en repère fixe, le couplage entre ces deux circuits hydrauliques.

L'étage électrique de pilotage de chacune des trois servo-valves 35 est commandé par des ordres électriques qui lui sont transmis par voie électrique et/ou optique en repère fixe, et qui correspondent aux mouvements des manches de pas général et cyclique manoeuvrés par le pilote.

Le dispositif de commande de pas comprend également un plateau tournant 38, dont une partie cylindrique et tubulaire 38a est montée coaxialement en rotation autour de la partie axiale 27a du plateau non-tournant 27, par deux roulements 39 décalés axialement l'un de l'autre, et entre lesquels est implanté un collecteur hydraulique annulaire 40, ainsi interposé entre les plateaux non-tournant 27 et tournant 38, et dont la fonction sera décrite ci-dessous.

Le plateau tournant 38 est entraîné en rotation avec le mât rotor par un compas tournant 41, dont la branche supérieure 41a est montée pivotante par son extrémité supérieure sur une attache 43 en saillie radiale sur le mât rotor 1, autour d'un pivot 42a, dont la branche inférieure 41b est montée pivotante par son extrémité inférieure sur une attache présentée par le bord supérieur de la partie axiale 38a du plateau tournant 38, autour d'un pivot 42b, les branches supérieure et inférieure 41a et 41b du compas étant montées pivotantes l'une sur l'autre autour d'un pivot 42c, et les axes des pivots 42a, 42b et 42c étant parallèles l'un à l'autre et perpendiculaires au plan radial passant par l'axe A et par les deux branches du compas 41.

Les mouvements du plateau tournant 38, qui non seulement tourne autour de l'axe A et sur le plateau non-tournant 27, mais également se translate et oscille avec le plateau non-tournant 27, sont transmis à chaque pale 7 par une bielle de commande de pas 44, dont l'extrémité supérieure est articulée sur l'extrémité du levier de commande de pas 24 correspondant. L'extrémité inférieure de la bielle 44 n'est pas articulée directement sur le plateau tournant 38, mais sur l'extrémité supérieure de la tige 46 d'un vérin multicyclique 45 implanté dans le plateau tournant 38.

Ce vérin 45 est un vérin linéaire hydraulique à double effet, à simple corps pour simplifier la description, dont la tige 46 porte un piston 47 monté coulissant avec étanchéité dans un alésage directement ménagé dans une partie radiale externe 48 du plateau tournant 38, qui forme le cylindre du vérin intégré dans ce plateau 38, et de sorte que le piston 47 délimite dans l'alésage du cylindre 48 qui le loge les deux chambres de travail du vérin, dont les volumes varient en sens opposé. Chacun de ces vérins 45, en nombre égal aux pales 7 du rotor, est alimenté en fluide hydraulique à haute pression par une servo-valve de commande 49, qui est directement accolée et fixée au plateau tournant 38 et au cylindre 48, et tourne avec eux, et qui est en communication avec chacune des deux chambres de travail du vérin 45 par l'une respectivement de deux canalisations hydrauliques 50a et 50b, formées par des canaux percés directement dans le plateau tournant 38 et dans sa partie formant le cylindre 48 du vérin 45 correspondant.

La servo-valve 49 est elle-même reliée à la partie tournant avec le plateau tournant 38 d'un joint rotatif de transfert de fluide hydraulique que comprend le collecteur hydraulique 40 par une conduite tournante d'alimentation hydraulique à haute pression 51 et une conduite tournante de retour hydraulique à basse pression 52, dont une partie de chacune est formée par un canal 51a ou 52a directement percé dans le plateau tournant 38.

De manière analogue, la partie du joint rotatif de transfert du collecteur hydraulique 40 qui est non-tournante avec le plateau non-tournant 27, est reliée au bloc hydraulique 37 par une conduite non-tournante d'alimentation à haute pression 53 et une conduite non-tournante de retour à basse pression 54, dont une partie de chacune est formée par un canal 53a ou 54a directement percé dans le plateau non-tournant 27.

Les parties des conduites hydrauliques 51, 52, 53 et 54 qui ne sont pas formées par des canaux percés dans l'un ou l'autre des plateaux 27 et 38 sont constituées par des tuyauteries flexibles ou rigides.

Ainsi, chacun des vérins électro-hydrauliques et multicycliques 45, monté en repère tournant, est commandé par une servo-valve 49 elle-même montée en repère tournant et alimentée en fluide hydraulique à partir du bloc hydraulique 37, en repère fixe, par l'intermédiaire du collecteur hydraulique 40, implanté entre les plateaux tournant 38 et non-tournant 27. De la sorte, chaque vérin multicyclique tournant 45 permet d'introduire, sur le levier de commande de pas 24 de la pale correspondante 7, une commande multicyclique en repère tournant, qui s'ajoute à la commande de pas collectif et de pas monocyclique assurée en repère fixe par les trois vérins monocycliques 30.

La position angulaire de chaque pale 7 autour de son axe de changement de pas X-X est définie par une boucle d'asservissement fermée, comprenant trois capteurs 55 de position angulaire, régulièrement répartis en direction circonférentielle à l'intérieur de l'extrémité radiale externe du manchon 10, et entre ce dernier et le fourreau 13 solidaire du pied de pale 11, capteurs 55 qui détectent ainsi les changements de position angulaire autour de son axe X-X par rapport au manchon 10. Ces capteurs 55 délivrent des signaux de sortie à des calculateurs (non représentés) embarqués dans l'hélicoptère et qui élaborent des ordres de commande qui sont transmis par voie optique et/ou électrique, en repère fixe, jusqu'à un collecteur électrique 56, monté dans la base du mât rotor 1. De ce collecteur électrique 56, ces ordres sont transmis en repère tournant jusqu'aux étages de pilotage électrique des servo-valves 49, pour assurer la commande correspondante des vérins multicycliques 45, afin d'actionner les leviers 24 faisant tourner les pales autour de leur axe de pas X-X.

Le dispositif de commande de pas ainsi réalisé est auto-adaptatif. Par sécurité, chacun des trois capteurs de rotation 55 d'une pale 7 est connecté à l'un respectivement de trois calculateurs commandant lui-même l'un respectivement des trois moteurs couple de l'étage de pilotage électrique de la servo-valve 49 correspondante. De même, par sécurité, chacun des vérins multicycliques 45 peut être un vérin à double corps, dont chaque corps est commandé par l'une respectivement de deux servo-valves telles que 49, alimentées chacune par l'un respectivement de deux collecteurs hydrauliques superposés, implantés entre les plateaux tournant et non-tournant et eux-mêmes alimentés en parallèle à partir du ou des circuits hydrauliques de l'hélicoptère.

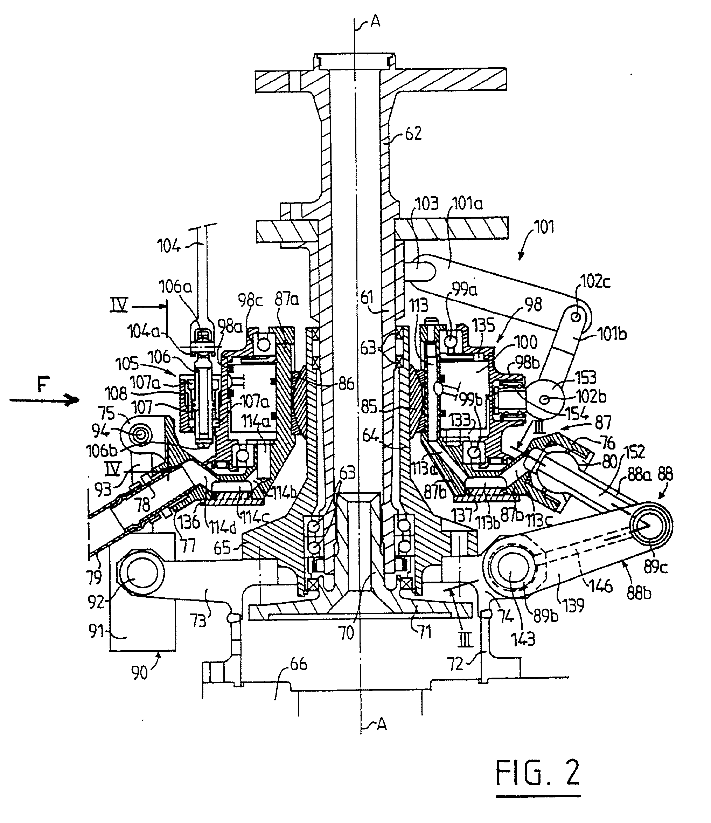

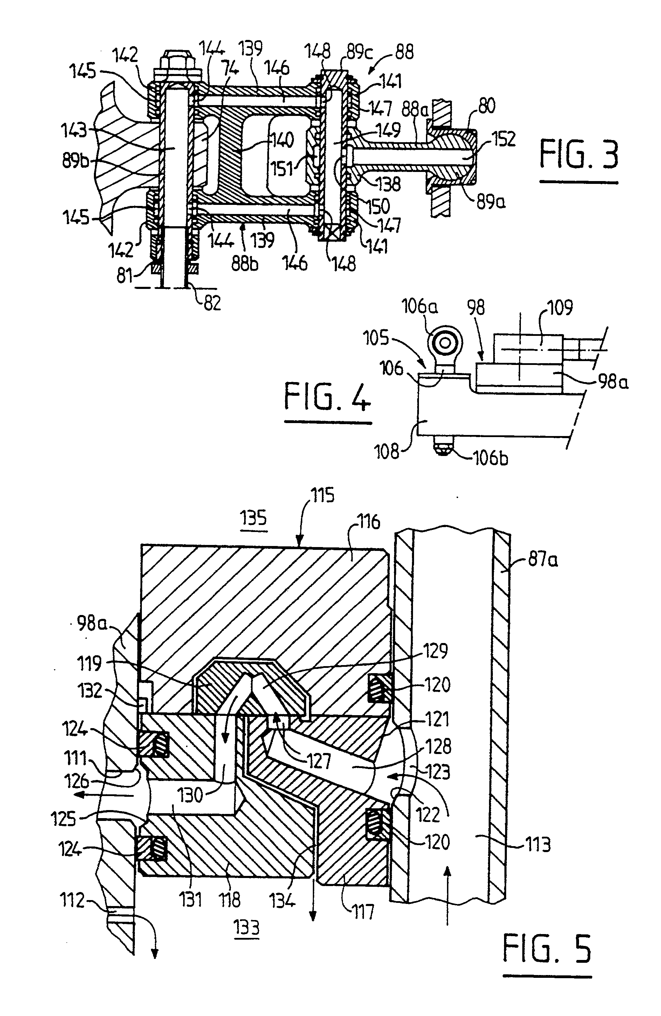

Sur le dispositif de commande de pas de la figure 2, on retrouve un manchon de guidage 64, cylindrique, tubulaire et fixe, dans lequel un mât rotor 61, solidaire d'un moyeu de rotor 62 à son extrémité supérieure, est monté en rotation autour de l'axe de rotation A du rotor par deux paires axialement espacées de roulements 63. Le mât rotor 61 est entraîné en rotation par des cannelures longitudinales internes de sa partie d'extrémité inférieure, en prise avec des cannelures longitudinales externes d'un arbre d'entraînement 70, emmanché dans la base du mât rotor 61 et muni d'une bride radiale externe 71, par laquelle cet arbre d'entraînement 70 est accouplé à l'arbre de sortie de la boîte de transmission principale, à l'intérieur d'une embase creuse de liaison à la structure 66 de l'hélicoptère, et formée de la bride radiale externe 65 à la base du manchon de guidage 64 et d'un carter annulaire 72, sur lequel cette bride 65 est fixée. Ce carter 72, fixé sur la structure 66, présente en saillie sensiblement radiale sur son bord supérieur, d'une part, trois bras fixes tels que 73, dont chacun supporte à pivotement, autour d'un pivot 92 perpendiculaire au plan radial passant par l'axe A, le cylindre 91 de l'un de trois vérins monocycliques 90 de commande du pas collectif et du pas cyclique, et, d'autre part, un bossage 74 sur lequel est montée pivotante l'extrémité inférieure du compas non-tournant 88, dont la structure particulière sera précisée ci-dessous en référence aux figures 2 et 3.

On retrouve également un coulisseau à rotule convexe 85, coulissant axialement par son alésage cylindrique central autour du guide 64, et dont la surface latérale externe convexe coopère avec un siège concave, en forme de calotte sphérique complémentaire, d'un support 86 entouré par la partie axiale tubulaire 87a, dont il est solidaire, d'un plateau non-tournant 87. Ce plateau non-tournant 87 comprend également une partie sensiblement radiale 87b, conformée sensiblement en gouttière ouverte vers le moyeu 62, et dont le bord radial externe présente, d'une part, trois attaches rigides et radiales telles que 75, dans chacune desquelles l'extrémité supérieure de la tige 93 de l'un des trois vérins monocycliques 90 est montée pivotante sur le pivot 94, parallèle au pivot 92, et, d'autre part, un embout cylindrique creux 76, dans lequel le raccordement du compas non-tournant 88 au plateau non-tournant 87 est assuré d'une manière décrite ci-dessous.

Comme dans l'exemple précédent, chacun des trois vérins monocycliques 90 est un vérin électrohydraulique linéaire commandé par une servo-valve (non représentée) directement accolée au cylindre 91 correspondant ou intégrée dans ce dernier, et elle-même alimentée en fluide hydraulique par des conduites non-tournantes (non représentées) à partir d'un bloc hydraulique (non représenté) de raccordement aux circuits hydrauliques de l'hélicoptère, et qui est monté en repère fixe sur la structure 66.

On retrouve également un plateau tournant 98, monté coaxialement en rotation sur le plateau non-tournant 87 par deux roulements 99a et 99b décalés axialement l'un de l'autre et entre lesquels un collecteur hydraulique 100 est implanté entre le plateau tournant 98 et le plateau non-tournant 87, pour alimenter des servo-valves telles que 109 (figure 4) solidaires du plateau tournant 98, donc montées en repère tournant, et dont chacune d'elles commande l'un de plusieurs vérins multicycliques 105, en nombre égal aux pales du rotor et implantés dans le plateau tournant 98. Le roulement supérieur 99a est monté entre l'extrémité supérieure de la partie axiale tubulaire 87a du plateau non-tournant 87 et un couvercle annulaire 98c de fermeture de l'extrémité supérieure d'une partie axiale tubulaire 98a du plateau tournant 98, tandis que le roulement inférieur 99b est monté entre un bord radial interne de la partie en gouttière 87b du plateau non-tournant 87 et l'extrémité inférieure surépaissie, en saillie radiale vers l'intérieur, de la partie axiale 98a du plateau tournant 98. De la sorte, le collecteur hydraulique annulaire 100 est logé dans les plateaux cycliques 87 et 98, et enveloppé en partie dans le plateau non-tournant 87 et en partie dans le plateau tournant 98. La partie axiale 98a de ce dernier porte, en saillie radiale vers l'extérieur, d'une part, un embout tubulaire creux 98b, dans lequel le raccordement du compas tournant 101 au plateau tournant 98 est assuré d'une manière décrite ci-dessous, et, d'autre part, pour chacun des vérins multicycliques 105, c'est-à-dire pour chacune des pales (non représentées) du rotor, un bloc 108 aménagé en cylindre pour le vérin 105 correspondant.

Chaque vérin multicyclique 105 est, dans cet exemple également, un vérin linéaire électro-hydraulique à double effet, dont le cylindre 108 est ainsi directement intégré dans le plateau tournant 98, et dont la tige 106 porte un piston annulaire 107, monté coulissant avec étanchéité dans le cylindre 108 entre deux joints d'étanchéité dynamiques 107a fermant les chambres de travail opposées du vérin 105. Dans cet exemple, la tige 106 du vérin est creuse et son extrémité inférieure, en saillie sous le cylindre 108, est fermée par un bouchon 106b, tandis que son extrémité supérieure présente un embout à rotule 106a, par lequel la tige 106 est accouplée à une chape 104a de l'extrémité inférieure d'une bielle de commande de pas 104, dont l'extrémité supérieure est accouplée au levier de commande de pas (non représenté) de la pale correspondante. Comme les deux chambres de travail du vérin 105 sont délimitées dans un cylindre 108 qui est d'une seule pièce avec le carter annulaire 98a du plateau tournant 98, sur lequel est directement rapportée la servo-valve de commande 109 correspondante, la liaison hydraulique entre ces deux chambres du vérin 105 et la servo-valve 109 est assurée par des canalisations hydrauliques entièrement formées par des canaux percés dans le carter annulaire 98a. De même, la servo-valve 109 est reliée au collecteur hydraulique 100 par des canalisations hydrauliques formées entièrement par des canaux percés dans ce même carter annulaire 98a. Ces derniers canaux sont partiellement représentés sur la figure 5, en référence à laquelle on décrit à présent la structure du collecteur hydraulique 100, et sur laquelle est également partiellement représenté un canal percé dans la partie axiale 87a du plateau non-tournant 87, pour alimenter le collecteur hydraulique 100 en fluide hydraulique à haute pression, les canalisations hydrauliques d'alimentation à haute pression et de retour à basse pression étant plus complètement représentées sur les figures 2 et 3.

En effet, le collecteur hydraulique 100 utilisé est du type comprenant un joint de transfert rotatif de fluide hydraulique sous haute pression entre deux pièces montées l'une dans l'autre et en rotation relative à grande vitesse, ce joint de transfert rotatif étant par exemple tel que ceux commercialisés sous la dénomination "Rotostat" par la société Glyco Industrie Automation, qui sont des joints rotatifs à gros débit transmettant essentiellement une pression statique, entre un carter annulaire et un organe tubulaire interne, qui sont entraînés en rotation relative l'un par rapport à l'autre, avec un faible débit de fuite et de faibles couples de frottement.

Une demi-coupe diamétrale d'un joint de transfert rotatif de ce type, implanté entre le carter annulaire 98a du plateau tournant 98 et la partie tubulaire axiale 87a du plateau non-tournant 87, est schématiquement représentée sur la figure 5. Ce joint de transfert rotatif 115 comprend essentiellement quatre organes annulaires 116, 117, 118 et 119, de révolution autour d'un axe commun qui est l'axe A du rotor, et tels que les organes 116 et 117, respectivement en position axiale supérieure entre les parties 98a et 87a des deux plateaux et en position axiale inférieure et radiale interne autour de la partie 97a du plateau non-tournant 87, sont assemblés l'un à l'autre par des vis (non représentées) et sur la partie 87a du plateau non-tournant 87, contre lequel ils sont appliqués par deux joints d'étanchéité statique 120, espacés axialement de part et d'autre d'une rainure radiale interne de révolution 121, usinée dans l'organe 117 et en regard d'une rainure de révolution 122, usinée dans la face radiale externe de la partie 87a, et en communication par un orifice 123 percé dans cette partie 87a avec un canal longitudinal 113 également percé dans cette partie de plateau 87a, pour l'alimentation hydraulique sous haute pression. Les deux autres organes principaux du joint 115 sont un organe 118 en position axiale inférieure et radiale externe, qui entoure avec du jeu radial l'organe 117 lié au plateau non-tournant 87, et une couronne 119, qui est assemblée par des vis (non représentées) à l'organe 118, et est logée avec du jeu radial et axial dans une gorge ménagée dans la face radiale inférieure de l'organe 116, de sorte que la couronne 119 soit en saillie axiale au-dessus de l'organe 118 qui la porte et en saillie radiale vers l'intérieur par rapport à cet organe 118, et elle s'étende au-dessus d'une partie radiale externe de la face supérieure de l'organe 117. De plus, la couronne 119 et l'organe 118 qui la porte sont assemblés au carter annulaire 98a du plateau tournant 98, contre lequel l'organe 118 est appliqué par deux joints d'étanchéité statique 124, axialement espacés de part et d'autre d'une rainure radiale externe de révolution 125, usinée dans l'organe 118 en regard d'une rainure de révolution 126, usinée dans la face radiale interne du carter annulaire 98a du plateau tournant 98, et dans laquelle débouchent des canaux 111, percés dans ce carter 98a, et dont chacun assure l'alimentation hydraulique à haute pression d'une servo-valve 109 de commande d'un vérin multicyclique 105.

La couronne 119 est liée avec un faible jeu axial, déterminé par une entretoise de faible épaisseur, à l'organe 118, de sorte que des fentes situées dans un même plan radial sont délimitées entre, d'une part, la couronne 119 et l'organe supérieur 116, et, d'autre part, les deux organes inférieurs 117 et 118, ces fentes coplanaires s'étendant radialement à l'intérieur et à l'extérieur d'une rainure de distribution 127, usinée de révolution dans la partie radiale externe de l'organe 117, en regard de la couronne 119, et en communication par un canal 128 percé dans l'organe 117 avec la rainure radiale interne 121 de cet organe 117. En regard de la rainure 127 débouche une extrémité d'un canal coudé 129 percé dans la couronne 119, et dont l'autre extrémité débouche en regard d'un canal 130 percé axialement dans l'organe 118, et en communication par un canal radial 131, également percé dans cet organe 118, avec la rainure radiale externe 125 présentée par cet organe 118.

Le fluide hydraulique sous pression arrive dans la partie annulaire 87a du plateau non-tournant 87 par le canal 113 interne à ce plateau et s'écoule par l'orifice 123 et la rainure 122 dans la rainure 121, d'où le fluide s'écoule par le canal 128 jusqu'à la rainure de distribution 127 de l'organe 117. De cette rainure de distribution 127, le fluide sous pression est transféré dans le canal 129 de la couronne 119, puis dans les canaux 130 et 131 de l'organe 118, jusqu'à la rainure 125 de ce dernier, d'où le fluide s'écoule dans la rainure 126 du carter annulaire 98a du plateau tournant 98, et de cette rainure, par les canaux 111 internes à ce carter 98a, jusqu'aux servo-valves 109. Comme la rainure de distribution 127 débouche dans le plan des fentes coplanaires précitées, il s'établit dans ces fentes, qui délimitent deux surfaces opposées de valeurs différentes sur la couronne 119 et les organes 117 et 118 en regard, une pression différentielle et un débit de fluide hydraulique à cette pression différentielle circule autour de la couronne 119, entre cette dernière et les parois et le fond de la gorge qui la loge. Sur les surfaces opposées délimitées par ces fentes coplanaires s'exercent d'une part la haute pression régnant dans la rainure de distribution 127 et d'autre part la pression différentielle engendrée par les fentes coplanaires, de sorte que, dans un état d'équilibre du joint, ces deux pressions engendrent deux forces opposées de valeur égale. Toute force externe qui tend à provoquer un déplacement relatif de la partie du joint 116, 117 en contact avec le plateau non-tournant 87 et de la partie du joint 118, 119 en contact avec le plateau tournant 98, entraîne une variation de la valeur des fentes coplanaires, donc une variation de la pression différentielle s'établissant dans ces fentes, de sorte que la résultante des forces s'exerçant sur les deux parties du joint tend à ramener ces deux parties en position d'équilibre. Il en résulte un asservissement hydro-statique maintenant les fentes coplanaires à une valeur prédéterminée et tolérant un jeu radial relativement important ainsi qu'un certain défaut d'alignement ou voilage du plateau tournant par rapport au plateau non-tournant. Le positionnement axial du joint 115 est assuré par l'application de la face supérieure de l'organe 118, solidaire en rotation du plateau tournant 98, contre une surface de butée plane du plateau tournant 98, en saillie radiale interne vers le plateau non-tournant 87, et telle que définie par exemple par l'épaulement radial 132 sur la figure 5, cet appui étant assuré par au moins un organe élastique, tel qu'une rondelle-ressort (non représentée) sollicitant l'organe 118 au niveau de sa face inférieure.

La canalisation de retour hydraulique à basse pression de chaque servo-valve 109 vers le collecteur hydraulique 100 est formée par un canal 112 percé dans le carter annulaire 98a du plateau tournant 98 et débouchant dans une chambre collectrice à basse pression 133 ménagée dans le collecteur hydraulique 100, en-dessous du joint de transfert rotatif 115 et au-dessus du roulement inférieur 99b, et entre les parties 87a et 98a des plateaux non-tournant 87 et tournant 98. Cette chambre collectrice à basse pression 133, partiellement représentée sur la figure 5, recueille également le débit de fuite s'écoulant par le jeu radial 134 entre les deux organes 117 et 118 en position inférieure du joint 115. Il est également à noter que le fluide hydraulique s'écoulant entre l'organe supérieur 116 de ce joint 115 et le carter annulaire 98a est recueilli dans la chambre supérieure 135 (voir figure 5) du collecteur hydraulique 100, au-dessus du joint 115 et sous le roulement supérieur 99a, cette chambre 135, en position supérieure, étant elle-même reliée à la chambre collectrice à basse pression 133, en position inférieure, par au moins un canal (non représenté) percé dans la partie 87a du plateau non-tournant 87.

Les joints de transfert rotatif de ce type, connus et brevetés au nom de Cyphelly, sont des joints travaillant en frottements visqueux et n'opposant que de très faibles couples de frottements, même lorsqu'ils fonctionnent à haute pression et grande vitesse de rotation.

Le retour du fluide hydraulique de la chambre collectrice à basse pression 133 du collecteur 100 vers le ou les circuits hydrauliques de l'hélicoptère est assuré par une canalisation de retour formée par des canaux internes à la partie en gouttière 87b du plateau non-tournant 87 et par une conduite flexible, de la manière décrite ci-dessous.

Ces canaux de retour et internes au plateau non-tournant 87 sont représentés sur la figure 2, et comprennent le canal axial 114a, percé dans la portion radiale interne de la partie en gouttière 87b, et débouchant vers le haut dans la chambre de retour à basse pression 133 du collecteur hydraulique 100, et vers le bas dans un canal incliné 114b, percé dans la base de la gouttière 87b à partir d'un évidement 114c, usiné dans cette base et obturé par un bouchon étanche 136, afin de former un conduit de raccordement à un autre canal incliné 114d, également percé dans la base de la gouttière 87b à partir de l'évidement 114c, et débouchant lui-même au fond d'un embout cylindrique creux 77 présenté par la gouttière 87b en saillie vers l'extérieur et vers le bas. Un raccord 78 de liaison étanche à une tuyauterie souple 79, non tournante et de gros diamètre pour assurer une bonne détente du fluide hydraulique de retour, est connecté de manière étanche et amovible dans l'embout 77, et l'autre extrémité de la tuyauterie souple 79 est raccordée sur le retour du ou des circuits hydrauliques de l'hélicoptère par l'intermédiaire du bloc hydraulique précité (non représenté) fixé sur la structure de l'hélicoptère.

Pour alimenter le collecteur hydraulique 100, l'arrivée du fluide hydraulique à haute pression dans le canal 113, interne à la partie axiale 87a du plateau non-tournant 87, est assurée par une canalisation hydraulique partiellement formée de canaux internes à la gouttière 87b de ce plateau 87 et de canaux internes au compas non-tournant 88, comme décrit à présent en référence aux figures 2 et 3. Ces canaux internes à la gouttière 87b comprennent un canal 113a, débouchant à l'extrémité inférieure du canal 113 et percé incliné dans la portion radiale interne de cette gouttière, à partir d'un évidement 113b usiné dans la base de cette gouttière 87b, et obturé par un bouchon étanche 137, pour former un conduit de liaison entre le canal 113a et un autre canal incliné 113c, percé dans la portion radiale externe de la gouttière 87b, à partir de l'évidement 113b, et qui débouche lui-même dans le fond de l'embout 76, qui loge avec étanchéité un siège sphérique concave 80, à fond percé pour communiquer avec les canaux 113c, 113b, 113a et 113.

La branche supérieure 88a du compas non-tournant 88 est une bielle dont l'extrémité supérieure est conformée en rotule sphérique 89a, logée dans le siège sphérique concave 80, et dont l'extrémité inférieure 138 est montée pivotante avec étanchéité autour de la partie centrale d'un pivot tubulaire 89c de liaison à la branche inférieure 88b de ce compas. Cette branche inférieure a la forme d'un H et est constituée de deux bielles latérales 139, parallèles et symétriques l'une de l'autre, et d'une entretoise 140 qui les relie rigidement l'une à l'autre (voir figure 3). Par leur extrémité supérieure 141, les deux bielles 139 sont montées simultanément pivotantes avec étanchéité autour des parties d'extrémité axiale du pivot tubulaire 89c, de part et d'autre de la base 138 de la bielle supérieure 88a, tandis que par leur extrémité inférieure 142, les deux bielles 139 sont montées simultanément pivotantes avec étanchéité autour des parties d'extrémité axiale d'un pivot tubulaire 89b, dont la partie centrale traverse un alésage ménagé dans le bossage 74 sur le carter d'embase fixe 72 du dispositif. Le canal axial 143, interne au pivot 89b, débouche à une extrémité axiale de ce pivot, qui fait saillie à l'extérieur d'une partie inférieure 142 d'une bielle inférieure 139, et par laquelle un raccord 81 de liaison étanche à une tuyauterie 82, souple et non-tournante, est connecté de manière étanche au pivot 89b. L'autre extrémité de la tuyauterie 82 est raccordée à l'alimentation à haute pression du ou des circuits hydrauliques de l'hélicoptère par l'intermédiaire du bloc hydraulique précité fixé sur la structure. Le canal central 143 du pivot 89b est borgne du côté de l'extrémité opposée de ce pivot, mais, par des perçages radiaux 144 ménagés dans les parties du pivot 89b logées dans les extrémités inférieures 142 des bielles 139, ce canal central 143 communique avec des gorges 145 internes à ces extrémités inférieures 142 et en communication avec des canaux longitudinaux 146 percés selon l'axe des bielles inférieures 139. Ces canaux longitudinaux 146 débouchent également dans des gorges 147 internes aux extrémités supérieures 141 des bielles inférieures 139 et en communication, par des perçages radiaux 148 dans les parties en regard du pivot tubulaire 89c, avec le canal axial 149 interne à ce pivot 89c. Dans la partie centrale de ce dernier, un autre perçage radial 150 fait communiquer son canal axial 149 avec une gorge 151 interne à la base 138 de la bielle supérieure 88a, et dans laquelle débouche l'extrémité inférieure d'un canal axial 152 percé dans la bielle 88a et débouchant, à son extrémité supérieure, dans le trou percé au fond du siège concave 80.

Ainsi, le fluide hydraulique sous haute pression admis dans le canal central 143 du pivot inférieur 89b par la tuyauterie souple 82, est transmis, par les canaux longitudinaux 146 des bielles inférieures 139 puis par le canal axial 149 du pivot 89c et par le canal 152 de la bielle supérieure 88a, jusqu'aux canaux percés dans le plateau non-tournant 87 pour alimenter le collecteur hydraulique 100.

Par construction, les axes des pivots 89b et 89c sont parallèles l'un à l'autre et perpendiculaires au plan radial passant par l'axe A et par l'axe de la bielle supérieure 88a.

Pour ce qui concerne le compas tournant 101, sa branche supérieure 101a est montée pivotante, par son extrémité supérieure, sur une attache 103 solidaire du mât rotor 61, et par son extrémité inférieure sur l'extrémité supérieure de sa branche inférieure 101b, autour d'un pivot 102c d'axe parallèle à l'axe de pivotement sur l'attache 103 et perpendiculaire au plan radial passant par l'axe A et par l'axe des branches 101a et 101b. A son extrémité inférieure, la branche inférieure 101b de ce compas est montée pivotante, autour d'un pivot 102b, d'axe parallèle à celui du pivot 102c, sur la tête 153 d'un embout à corps cylindrique 154 monté tourillonnant par des roulements dans l'embout creux 98b du carter annulaire 98a du plateau tournant 98.

Dans cet exemple, on constate que la reprise de la quasi intégralité des efforts s'exerçant sur les différents composants du dispositif de commande de pas, et notamment des efforts centrifuges, est directement assurée par le carter du plateau tournant 98. L'utilisation de joints d'étanchéité dynamique est essentiellement limitée aux vérins multicycliques 105 et monocycliques 90, du fait que le collecteur hydraulique 100 comporte un joint de transfert rotatif 115 uniquement équipé de joints d'étanchéité statique. L'intégration, dans les plateaux cycliques 87 et 98, des cylindres 108 des vérins multicycliques 105, des canaux qui les relient aux servo-valves de commande, des canaux reliant ces dernières au collecteur hydraulique, et des canaux reliant ce dernier aux circuits hydrauliques de l'hélicoptère, diminue l'encombrement du dispositif et la trainée aérodynamique d'ensemble, tout en améliorant la protection de ces composants essentiels du dispositif.

Il est à noter que le dispositif selon l'invention permet de transformer un dispositif de commande de pas classique, sans commande multicyclique, en une configuration avec commande multicyclique. Le dispositif selon l'invention permet donc de rééquiper des hélicoptères existants, en conservant l'architecture d'ensemble de leurs rotors principaux et de leurs dispositifs de commande. De plus, l'ensemble des vérins multicycliques 105, des servo-valves de commande 109 et du collecteur hydraulique 100, intégré dans les plateaux cycliques 87 et 98, ne comporte aucun élément de raccordement rapporté, ce qui est une garantie de fiabilité. En outre, les éléments mécaniques du moyeu qui sont fortement sollicités en service, tels que les bielles de commande de pas, les manchons de liaison des pales au moyeu, ne supportent aucun élément mécanique supplémentaire dû à la commande multicyclique.

Dans l'exemple de la figure 2 comme dans celui de la figure 1, la commande électrique des servo-valves 109 est assurée par un collecteur électrique et/ou optique (non représenté) appartenant à une boucle d'asservissement fermée, comportant également des capteurs de position angulaire des pales autour de leur axe de pas, et qui est installée partiellement en repère tournant.

Les dispositifs de commande de pas monocyclique en repère fixe et multicyclique en repère tournant selon l'invention permettent de rechercher une maximisation de portance à puissance égale et/ou une minimisation de puissance, à portance égale. Ils permettent également de rechercher une meilleure répartition de la portance développée sur une pale au cours de sa rotation autour de l'axe du rotor, ce qui peut conduire à une quasi suppression des zones de décrochage des pales. A titre d'exemple, avec une exploration multicyclique en pas de ± 6°, correspondant à une commande quadricyclique, on peut obtenir un accroissement de portance de 17% environ.

D'une manière générale, ces dispositifs de commande de pas assurent des gains de performances aux fortes charges et/ou aux grandes vitesses, et assurent des réductions importantes des niveaux vibratoires.

**Revendications**

1. Dispositif de commande de pas monocyclique en repère fixe et multicyclique en repère tournant, pour les pale (7) d'un rotor de giravion, comprenant, pour assurer la commande de pas général et monocyclique en repère fixe, un ensemble à plateaux cycliques (27, 38) comportant :

— un plateau non-tournant (27), monté, d'une part, coulissant axialement autour d'un guide cylindrique fixe (4), solidaire de la structure (6) du giravion et entourant sensiblement coaxialement le mât rotor (1), et, d'autre part, oscillant angulairement par une rotule (25) sur l'axe (A) du mât rotor (1),

— au moins un compas non-tournant (28), articulé, d'une part, sur ladite structure (6) du giravion, et, d'autre part, sur ledit plateau non-tournant (27),

— au moins trois actionneurs (30) de commande pilote, dont chacun est relié, d'une part, à ladite structure (6) du giravion, et, d'autre part, audit plateau non-tournant (27), afin de commander les mouvements de translation et de basculement dudit plateau non-tournant (27) respectivement le long dudit guide (4) et sur ladite rotule (25),

— un plateau tournant (38), monté en rotation par au moins un roulement (39) sur ledit plateau non-tournant (27) et sensiblement coaxialement à ce dernier,

— au moins un compas tournant (41), articulé, d'une part, sur ledit plateau tournant (38), et, d'autre part, sur ledit rotor (1, 2), et,

— des bielles (44) de commande de pas, en nombre égal aux pales (7) du rotor, et dont chacune est reliée, d'une part, audit plateau tournant (38), et, d'autre part, à un levier de commande de pas (24) d'une pale correspondante (7) du rotor,

le dispositif comprenant également, pour assurer la commande de pas multicyclique en repère tournant, des actionneurs linéaires multicycliques (45), en nombre égal aux pales (7) du rotor, disposés à l'extérieur du mât rotor (1) et sensiblement longitudinalement par rapport à l'axe (A) dudit mât rotor (1), et montés tournant avec le rotor (1, 2) autour dudit axe (A), de sorte que chaque actionneur multicyclique (45) actionne une bielle de commande de pas (44) d'une pale (7) correspondante du rotor, caractérisé en ce que l'actionneur linéaire multicyclique de chaque pale (7) est un vérin (45) hydraulique à double effet à au moins un corps, implanté sur ledit plateau tournant (38) par l'un des deux éléments que constituent son cyclindre (48) et sa tige (46), tandis que l'autre élément du vérin (45) est directement articulé sur ladite bielle de commande de pas (44) de la pale (7) correspondante, chaque corps dudit vérin (45) étant alimenté à partir d'au moins un circuit hydraulique de puissance par l'intermédiaire d'au moins une servo-valve électro-hydraulique de commande (49).

2. Dispositif de commande de pas selon la revendication 1, caractérisé en ce que chaque vérin multicyclique (45) est intégré par son cylindre (48) dans ledit plateau tournant (38) et articulé par sa tige (46) à ladite bielle de commande de pas (44) correspondante.

3. Dispositif de commande de pas selon l'une des revendications 1 et 2, caractérisé en ce que chaque servo-valve de commande (49) d'un vérin multicyclique (45) est également montée en repère tournant et supportée par ledit plateau tournant (38).

4. Dispositif de commande de pas selon la revendication 3, caractérisé en ce qu'au moins une servo-valve de commande (49) d'un vérin multicyclique (45) est accolée au cylindre (48) du vérin multicyclique (45) qu'elle commande

5. Dispositif de commande de pas selon la revendication 3, caractérisé en ce qu'au moins une servo-valve de commande (49) d'un vérin multicyclique (45) est intégrée dans ou rapportée sur ledit plateau tournant (38).

6. Dispositif de commande de pas selon l'une des revendications 3 à 5, caractérisé en ce qu'au moins une servo-valve de commande (49) est reliée au vérin multicyclique (45) qu'elle commande par des canalisations hydrauliques formées, au moins partiellement, par des canaux (50a, 50b) percés dans ledit plateau tournant (38)

7. Dispositif de commande de pas selon l'une des revendications 1 à 6, caractérisé en ce que les servo-valves de commande (49) des vérins multicycliques (45) sont alimentées en fluide hydraulique à partir d'au moins un circuit hydraulique de puissance, par l'intermédiaire d'au moins un collecteur hydraulique (40) essentiellement logé dans lesdits plateaux cycliques tournant (38) et non-tournant (27).

8. Dispositif de commande de pas selon la revendication 7, caractérisé en ce que ledit collecteur hydraulique (40) est en communication avec lesdites servo-valves de commande (49) des vérins multicycliques (45) par des canalisations hydrauliques (51, 52) formées au moins partiellement par des canaux (51a, 52a) ménagés dans ledit plateau tournant (38).

9. Dispositif de commande de pas selon l'une des revendications 7 et 8, caractérisé en ce que ledit collecteur hydraulique (40) est en communication avec au moins un circuit hydraulique de puissance du giravion par des canalisations hydrauliques (53, 54) formées au moins partiellement par des canaux (53a, 54a) ménagés dans ledit plateau non-tournant (27), et dont l'une au moins est reliée à un bloc hydraulique (37) d'alimentation à haute pression et/ou de retour à basse pression, qui est fixé sur la structure (6) du giravion.

10. Dispositif de commande de pas selon l'une des revendications 7 à 9, caractérisé en ce que ledit collecteur hydraulique (40) est annulaire et intercalé entre lesdits plateaux tournant (38) et non-trouvant (27), dans l'un au moins desquels il est partiellement intégré.

11. Dispositif de commande de pas selon la revendication 10, caractérisé en ce que ledit collecteur hydraulique (40) est implanté entre deux roulements (39) espacés axialement autour du mât rotor (1) et par lesquels ledit plateau tournant (38) est monté en rotation sur ledit plateau non-tournant (27).

12. Dispositif de commande de pas selon l'une des revendications 10 et 11, caractérisé en ce que ledit collecteur hydraulique (100) est du type comportant un joint de transfert rotatif (115) de fluide hydraulique à haute pression entre deux pièces (87a, 98a) sensiblement coaxiales et entraînées en rotation relative l'une dans l'autre, dont l'une (98a) est solidaire en rotation du plateau tournant (98) et l'autre (87a) du plateau non-tournant (87).

13. Dispositif de commande de pas selon la revendication 12, caractérisé en ce que ledit joint de transfert rotatif (115) comporte deux organes annulaires de révolution sensiblement coaxiaux (116-117, 118), dont l'un (116-117) est en contact radial avec le plateau non-tournant (87) par deux joints d'étanchéité statique (120) axialement espacés de part et d'autre d'une rainure de distribution (121), de révolution sur cet organe (116-117) et en regard d'une rainure de distribution (122) du plateau non-tournant (87), dans laquelle débouche au moins un canal (113) interne à ce dernier et en communication avec une canalisation d'alimentation à haute pression, l'autre organe (118) étant en contact radial avec le plateau tournant (98) également par deux joints d'étanchéité statique (124) axialement espacés de part et d'autre d'une rainure de distribution (125), de révolution sur cet organe (118), et en regard d'une rainure de distribution (126) du plateau tournant (98), dans laquelle débouche au moins un canal (111) interne à ce dernier, pour l'alimentation à haute pression d'au moins une servo-valve de commande (109) d'un vérin multicyclique (105), l'un (118) des deux organes entourant, avec un faible jeu radial (134), une partie axiale (117) de l'autre (116-117) et portant une couronne de révolution (119) en saillie axiale et radiale par rapport à l'organe (118) qui la porte, et engagée avec du jeu dans une gorge de révolution ménagée dans l'autre organe (116-117), en formant, en regard des deux organes et entre ces derniers, des fentes d'étanchéité radiales et coplanaires s'étendant de part et d'autre d'une rainure de transfert de distribution (127), ménagée de révolution dans l'autre organe (116-117) et en communication avec l'autre rainure de distribution (121) de cet autre organe par au moins un canal (128) interne à ce dernier, tandis que la couronne (119) est percée d'un canal de transfert (129) débouchant, à une extrémité, en regard de ladite rainure de transfert de distribution (127) et, à l'autre extrémité, en regard d'un canal (130-131) percé dans l'organe (118) portant la couronne (119) et en communication avec l'autre rainure de distribution (125) de cet organe.

14. Dispositif de commande de pas selon l'une des revendications 7 à 13, caractérisé en ce que le collecteur hydraulique (100) comprend une chambre d'extrémité inférieure (133), délimitée entre les plateaux tournant (98) et non-tournant (87), pour la récupération du débit de fuite du collecteur (100) et dans laquelle débouche, d'une part, au moins un canal (112) interne au plateau tournant (98), et en communication avec le retour basse pression d'au moins une servo-valve de commande (109) d'un vérin multicyclique (105) et, d'autre part, au moins un canal (114a-114b-114c-114d) interne au plateau non-tournant (87) et en communication avec une canalisation de retour basse pression d'au moins un circuit hydraulique.

15. Dispositif de commande de pas selon la revendication 14, caractérisé en ce que au moins un canal de retour à basse pression (114a-114b-114c-114d) interne au plateau non-tournant (87) est raccordé de manière étanche à une conduite de retour (79), de gros diamètre, souple et externe au plateau non-tournant (87), et raccordant ledit plateau non-tournant au bloc hydraulique solidaire de la structure du giravion.

16. Dispositif de commande de pas selon l'une des revendications 9 à 15, caractérisé en ce qu'au moins un canal (113) interne au plateau non-tournant (87) et d'alimentation sous haute pression du collecteur hydraulique (100) est raccordé de manière étanche à au moins un circuit hydraulique par l'intermédiaire d'au moins un canal (143-146-149-152) interne au compas non-tournant (88).

17. Dispositif de commande de pas selon la revendication 16, caractérisé en ce que la branche supérieure du compas non-tournant (88) est une bielle (88a) montée pivotante par une extrémité (138) autour d'un pivot (89c) de liaison à la branche inférieure (88b) dudit compas non-tournant (88), l'autre extrémité (89a) de la bielle (88a) étant conformée en rotule articulée dans un siège sphérique (80) du plateau non-tournant (87), et en ce que la bielle (88a) est percée d'un canal interne longitudinal (152) en communication, d'un côté, avec un canal (149) interne au pivot (89c) et alimenté en fluide hydraulique sous haute pression à partir d'au moins un circuit hydraulique de puissance, le canal interne (152) de ladite bielle (88a) traversant la rotule (89a), de l'autre côté, et débouchant en regard d'un canal (113c) interne au plateau non-tournant (87) et s'ouvrant dans le fond du siège sphérique (80) dudit plateau non-tournant (87).

18. Dispositif de commande de pas selon la revendication 17, caractérisé en ce que la branche inférieure (88b) du compas non-tournant (88) est conformée en levier double, comportant deux bielles (139) rigidement liées l'une à l'autre (140) et montées simultanément pivotantes, par leurs extrémités (141, 142) et autour de deux axes parallèles l'un à l'autre et perpendiculaires à l'axe (A) du mât rotor (61), d'un côté sur le pivot (89c) de liaison à la branche supérieure (88a) dudit compas non-tournant (88), et de l'autre côté sur un pivot (89b) de liaison à la structure (74) du giravion, ledit canal (149) interne au pivot (89c) de liaison à la branche supérieure (88a) étant alimenté en fluide hydraulique sous haute pression par au moins un canal (146) interne et longitudinal, ménagé dans l'une au moins des deux bielles (139) du levier double (88b), et lui-même en communication avec un canal (143) interne au pivot (89b) de liaison à la structure (74), et qui est alimenté en fluide hydraulique sous haute pression à partir du bloc hydraulique solidaire de la structure.

19. Dispositif de commande de pas selon la revendication 18, caractérisé en ce que le raccordement hydraulique entre ledit bloc hydraulique et ledit canal interne (143) au pivot (89b) de liaison à la structure (74) est assuré par au moins une conduite hydraulique externe (82) raccordée avec étanchéité sur au moins une extrémité axiale dudit pivot (89b) de liaison dans laquelle débouche le canal interne (143) à ce pivot.

20. Dispositif de commande de pas selon l'une des revendications 1 à 19, caractérisé en ce que chacun des actionneurs de commande pilote est un vérin (30) monocyclique, linéaire, hydraulique à double effet, et à au moins un corps, qui est relié par son cylindre (31) à la structure (6) du giravion, et par sa tige (33) au plateau non-tournant (27), et qui est commandé par au moins une servo-valve (35) non-tournante, solidaire du cylindre (31) dudit vérin (30), et reliée par des conduites hydrauliques (36a, 36b) non tournantes audit bloc hydraulique de raccordement (37) à au moins un circuit hydraulique de puissance du giravion.

21. Dispositif de commande de pas selon l'une des revendications 7 à 20, caractérisé en ce que chaque vérin multicyclique (45), et, le cas échéant, chaque vérin monocyclique (30) est alimenté en fluide hydraulique à partir d'au moins un circuit hydraulique de puissance principal et d'un circuit hydraulique de secours, qui sont montés sur le giravion et couplés l'un à l'autre par au moins un clapet automatique de commutation entre lesdits circuits, et monté en repère fixe, en amont du ou des collecteurs hydrauliques (40).

22. Dispositif de commande de pas selon l'une des revendications 7 à 21, caractérisé en ce que chaque vérin multicyclique est un vérin double corps, à deux étages en tandem, dont chaque étage est commandé par l'une respectivement de deux servo-valves de commande correspondantes, dont chacune est alimentée par l'une respectivement de deux collecteurs hydrauliques superposés, et chacun en communication avec l'un respectivement de deux circuits hydrauliques de puissance principaux du giravion.

23. Dispositif de commande de pas selon l'une des revendications 1 à 22, caractérisé en ce que chaque servo-valve (49) de commande du vérin multicyclique (45) de chaque pale (7) du rotor est elle-même commandée par des ordres provenant d'au moins un collecteur électrique et/ou optique (56), monté en repère tournant dans le mât-rotor (1) et élaborés à partir des signaux délivrés par au moins un capteur (55) de la position angulaire de la pale correspondante (7) autour de son axe de changement de pas (X-X).

## Patentansprüche

1. Vorrichtung zur Steuerung des monozyklischen Anstellwinkels mit festem Bezugspunkt und des multizyklischen Anstellwinkels mit rotierendem Bezugspunkt für die Blätter (7) eines Rotors eines Drehflügelflugzeugs, die zur Sicherstellung der Steuerung des allgemeinen und monozyklischen Anstellwinkels mit festem Bezugspunkt eine Einheit von zyklischen Platten (27, 38) umfaßt, die ihrerseits aufweist :

— eine drehfeste Platte (27), die einerseits um eine mit dem Aufbau (6) des Drehflügelflugzeugs verbundene, feste, zylindrische Führung (4) in axialer Richtung verschiebbar ist und den Rotormast (1) im wesentlichen koaxial umgibt und andererseits an der Achse (A) des Rotormastes (1) mittels eines Kugelgelenks (25) eine Winkelauslenkung ausführt,

— wenigstens einen drehfesten Zirkel-Mechanismus (28), der einerseits am Aufbau (6) des Drehflügelflugzeugs und andererseits an der drehfesten Platte (27) angelenkt ist,

— wenigstens drei Vorsteuerungs-Betätigungselemente (30), von denen jedes einerseits mit dem Aufbau (6) des Drehflügelflugzeugs und andererseits mit der drehfesten Platte (27) verbunden ist, um die Translations- und Kippbewegungen der drehfesten Platte (27) entlang der Führung (4) bzw. am Kugelgelenk (25) zu steuern,

— eine rotierende Platte (38), die mittels wenigstens eines Wälzlagers an der drehfesten Platte (27) und im wesentlichen koaxial zu dieser drehbar angebracht ist,

— wenigstens einen rotierenden Zirkel-Mechanismus (41), der einerseits an der rotierenden Platte (38) und andererseits am Rotor (1, 2) angelenkt ist, und

— Anstellwinkelsteuerungs-Stangen (44), deren Anzahl gleich derjenigen der Blätter (7) des Rotors ist und von denen jede einerseits mit der rotierenden Platte (38) und andererseits mit einem Anstellwinkelsteuerungs-Hebel (24) eines entsprechenden Blattes (7) des Rotors verbunden ist,

— wobei die Vorrichtung außerdem zur Sicherstellung der multizyklischen Anstellwinkelsteuerung mit rotierendem Bezugspunkt multizyklische lineare Betätigungselemete (45) umfaßt, deren Anzahl gleich derjenigen der Blätter (7) des Rotors ist und die außerhalb des Rotormastes (1) und im wesentlichen in Längsrichtung in bezug auf die Achse (A) des Rotormastes (1) angeordnet sind und mit dem Rotor (1, 2) um die Achse (A) drehbar sind, derart, daß jedes multizyklische Betätigungselement (45) eine Anstellwinkelsteuerungs-Stange (44) eines entsprechenden Blattes (7) des Rotors betätigt, dadurch gekennzeichnet, daß das multizyklische lineare Betätigungselement eines jeden Blattes (7) ein doppelt wirkender Arbeitszylinder (45) mit wenigstens einem Körper ist, der mit einem von zwei Elementen, die seinen Zylinder (48) und seine Stange (46) darstellen, in die rotierende Platte (38) eingesetzt ist, während das andere Element des Arbeitszylinders (45) direkt an der Anstellwinkelsteuerungs-Stange (44) des entsprechenden Blattes (7) angelenkt ist, wobei jeder Körper des Arbeitszylinders (45) von wenigstens einem Leistungshydraulikkreis über wenigstens ein elektrohydraulisches Steuerungs-Servoventil (49) versorgt wird.

2. Vorrichtung zur Anstellwinkelsteuerung gemäß Anspruch 1, dadurch gekennzeichnet, daß jeder multizyklische Arbeitszylinder (45) mit seinem Zylinder (48) in die rotierende Platte (38) integriert ist und mit seiner Stange (46) an der entsprechenden Anstellwinkelsteuerungs-Stange (44) angelenkt ist.

3. Vorrichtung zur Anstellwinkelsteuerung gemäß einem der Ansprüche 1 und 2, dadurch gekennzeichnet, daß jedes Steuerungs-Servoventil (49) eines multizyklischen Arbeitszylinders (45) ebenfalls mit rotierendem Bezugspunkt angebracht ist und von der rotierenden Platte (38) gehalten wird.

4. Vorrichtung zur Anstellwinkelsteuerung gemäß Anspruch 3, dadurch gekennzeichnet, daß wenigstens ein Steuerungs-Servoventil (49) eines multizyklischen Arbeitszylinders (45) am Zylinder (48) desjenigen multizyklischen Arbeitszylinders (45), den es steuert, angebaut ist.

5. Vorrichtung zur Anstellwinkelsteuerung gemäß Anspruch 3, dadurch gekennzeichnet, daß wenigstens ein Steuerungs-Servoventil (49) eines multizyklischen Arbeitszylinders (45) in die rotierende Platte (38) eingesetzt oder an diese angesetzt ist.

6. Vorrichtung zur Anstellwinkelsteuerung gemäß einem der Ansprüche 3 bis 5, dadurch gekennzeichnet, daß wenigstens ein Steuerungs-Servoventil (49) mit demjenigen multizyklischen Arbeitszylinder (45), den es steuert, über Hydraulikleitungen verbunden ist, die wenigstens teilweise durch Kanäle (50a, 50b), die die rotierende Platte (38) durchsetzen, gebildet sind.

7. Vorrichtung zur Anstellwinkelsteuerung gemäß einem der Ansprüche 1 bis 6, dadurch gekennzeichnet, daß die Steuerungs-Servoventile (49) der multizyklischen Arbeitszylinder (45) von wenigstens einem Leistungshydraulikkreis über wenigstens einen Hydrauliksammler (40), der im wesentlichen von den rotierenden (38) und drehfesten (27) zyklischen Platten aufgenommen wird, mit Hydraulikfluid versorgt werden.

8. Vorrichtung zur Anstellwinkelsteuerung gemäß Anspruch 7, dadurch gekennzeichnet, daß der Hydrauliksammler (40) mit den Steuerungs-Servoventilen (49) der multizyklischen Arbeitszylinder (45) mittels Hydraulikleitungen (51, 52), die wenigstens teilweise durch in der rotierenden Platte (38) vorgesehene Kanäle (51a, 52a) gebildet werden, in Verbindung steht.

9. Vorrichtung zur Anstellwinkelsteuerung gemäß einem der Ansprüche 7 und 8, dadurch gekennzeichnet, daß der Hydrauliksammler (40) mit wenigstens einem Leistungshydraulikkreis des Drehflügelflugzeugs über Hydraulikleitungen (53, 54) in Verbindung steht, die wenigstens teilweise durch in der drehfesten Platte (27) vorgesehene Kanäle (53a, 54a) gebildet sind und von denen wenigstens eine mit einem Hochdruckzuführungs- und/oder Niederdruckrückführungs-Hydraulikblock (37), der am Aufbau (6) des Drehflügelflugzeugs befestigt ist, verbunden ist.

10. Vorrichtung zur Anstellwinkelsteuerung gemäß einem der Ansprüche 7 bis 9, dadurch gekennzeichnet, daß der Hydrauliksammler (40) ringförmig ausgebildet ist und zwischen die rotierende Platte (38) und die drehfeste Platte (27) geschaltet ist, wobei er in wenigstens eine von diesen teilweise integriert ist.

11. Vorrichtung zur Anstellwinkelsteuerung gemäß Anspruch 10, dadurch gekennzeichnet, daß der Hydrauliksammler (40) zwischen zwei Wälzlager (39) eingesetzt ist, die in gegenseitigem axialen Abstand um den Rotormast (1) angeordnet sind und mittels denen die rotierende Platte (38) an der drehfesten Platte (27) drehbar angebracht ist.

12. Vorrichtung zur Anstellwinkelsteuerung gemäß einem der Ansprüche 10 und 11, dadurch gekennzeichnet, daß der Hydrauliksammler (100) von einer Bauart ist, die eine Dreh-kupplung (115) für den Übergang von mit hohem Druck beaufschlagtem Hydraulikfluid zwischen zwei im wesentlichen koaxialen und in Drehrichtung relativ zueinander angetriebenen Teilen (87a, 98a) aufweist, wobei eines der Teile (98a) mit der rotierenden Platte (98) und das andere Teil (87a) mit der drehfesten Platte (87) drehfest verbunden ist.

13. Vorrichtung zur Anstellwinkelsteuerung gemäß Anspruch 12, dadurch gekennzeichnet, daß die Drehkuplung zwei im wesentlichen koaxiale und rotationssymmetrische Ring- elemente (116-117, 118) aufweist, von denen sich eines (116-117) über zwei statische Dichtungen (120), die beiderseits einer an diesem Element (116-117) umlaufenden und gegenüber einer Verteilungsrille (122) der drehfesten Platte (87) befindlichen Verteilungsrille (121) in gegenseitigem axialen Abstand angeordnet sind, mit der drehfesten Platte (87) in radialem Kontakt befindet, wobei in die Verteilungsrille (122) der drehfesten Platte (87) wenigstens ein in dieser letzteren befindlicher und mit einer Hochdruck-Versorgungsleitung in Verbindung stehender Kanal (113) mündet, wobei sich das andere Element (118) ebenfalls über zwei statische Dichtungen (124), die beiderseits einer an diesem Element (118) umlaufenden und gegenüber einer Verteilungsrille (126) der rotierenden Platte (98) befindlichen Verteilungsrille (125) in gegenseitigem axialen Abstand angeordnet sind, mit der rotierenden Platte (98) in radialem Kontakt befindet, wobei in die rotierende Platte (98) wenigstens ein in dieser letzteren befindlicher Kanal (111) mündet, um wengistens ein Steuerungs-Servoventil (109) eines multizyklischen Arbeitszylinders (105) bei hohem Druck zu versorgen, wobei eines (118) der zwei Elemente mit geringem radialen Spiel (134) einen axialen Teil (117) des anderen (116-117) umgibt und einen rotationssymmetrischen Kranz (119) trägt, der in bezug auf dasjenige Element (118), das ihn trägt, axial und radial vorsteht und mit Spiel mit einer im anderen Element (116-117) ausgebildeten umlaufenden Auskehlung in Eingriff ist und dabei gegenüber den zwei Elementen und zwischen diesen letzteren radiale und koplanare Dichtungsschlitze ausbildet, die sich auf beiden Seiten einer Verteilungs-Transportrille (127) erstrecken, wobei die Verteilungs-Transportrille umlaufend im anderen Element (116-117) vorgesehen ist und mit der anderen Verteilungsrille (121) dieses anderen Elements über wenigstens einen in diesem letzteren befindlichen Kanal (128) in Verbindung steht, während der Kranz (119) von einem Transportkanal (129) durchsetzt wird, der an einem Ende gegenüber der Verteilungs-Transportrille (127) ausmündet und am anderen Ende gegenüber einem Kanal (130-131) ausmündet, der dasjenige Element (118) durchsetzt, das den Kranz (119) trägt und mit der anderen Verteilungsrille (125) dieses Elementes in Verbindung steht.

14. Vorrichtung zur Anstellwinkelsteuerung gemäß einem der Ansprüche 7 bis 13, dadurch gekennzeichnet, daß der Hydrauliksammler (100) eine untere Endkammer (133) umfaßt, die durch die rotierende (98) und die drehfeste (87) Platte begrenzt ist, die der Rückgewinnung der Leckmenge des Sammlers (100) dient und in die einerseits wenigstens ein in der rotierenden Platte (98) befindlicher Kanal (112), der mit der Niederdruck-Rückführung wenigstens eines Steuerungs-Servoventils (109)eines multizyklischen Arbeitszylinders (105) in Verbindung steht und andererseits wenigstens ein in der drehfesten Platte (87) befindlicher Kanal (114a-114b- 114c-114d), der mit einer Niederdruck-Rückführungsleitung wenigstens eines Hydraulikkreises in Verbindung steht, münden.

15. Vorrichtung zur Anstellwinkelsteuerung gemäß Anspruch 14, dadurch gekennzeichnet, daß wenigstens ein in der drehfesten Platte (87) befindlicher Niederdruck-Rückführungskanal (114a-114b-114c-114d) auf dichte Weise mit einer einen großen Durchmesser aufweisenden, biegsamen und außerhalb der drehfesten Platte (87) befindlichen Rückführungsleitung (79) verbunden ist und die drehfeste Platte mit dem mit dem Aufbau des Drehflügelflugzeugs verbundenen Hydraulikblock verbindet.

16. Vorrichtung zur Anstellwinkelsteuerung gemäß einem der Ansprüche 9 bis 15, dadurch gekennzeichnet, daß wenigstens ein in der drehfesten Platte (87) befindlicher Kanal (113) für die Hochdruck-Versorgung des Hydrauliksammlers (100) auf dichte Weise über wenigstens einen im drehfesten Zirkel-Mechanismus (88) befindlichen Kanal (143-146-149-152) mit wenigstens einem Hydraulikkreis verbunden ist.

17. Vorrichtung zur Anstellwinkelsteuerung gemäß Anspruch 16, dadurch gekennzeichnet, daß der obere Schenkel des drehfesten Zirkel-Mechanismus (88) eine Stange (88a) ist, die mit einem Ende um einen Verbindungsbolzen (89c) mit dem unteren Schenkel (88b) des drehfesten Zirkel-Mechanismus (88) schwenkbar angebracht ist, während das andere Ende (89a) der Stange (88a) als in einem sphärischen Sitz (80) der drehfesten Platte (87) schwenkbares Kugelgelenk ausgebildet ist, und daß die Stange (88a) von einem internen longitudinalen Kanal (152) durchsetzt wird, der an einer Seite mit einem im Bolzen (89c) befindlichen Kanal (149) in Verbindung steht und von wenigstens einem Leistungshydraulikkreis mit mit hohem Druck beaufschlagten Hydraulikfluid versorgt wird, wobei der interne Kanal (152) der Stange (88a) an der anderen Seite das Kugelgelenk (89a) durchsetzt, in einen in der drehfesten Platte (87) befindlichen Kanal (113c) mündet und sich in den Boden des sphärischen Sitzes (80) der drehfesten Platte (87) öffnet.

18. Vorrichtung zur Anstellwinkelsteuerung gemäß Anspruch 17, dadurch gekennzeichnet, daß der untere Schenkel (88b) des drehfesten Zirkel-Mechanismus (88) als Doppelhebel ausgebildet ist, der zwei Stangen (139) aufweist, die starr miteinander verbunden sind (140) und mit ihren Enden (141, 142) gleichzeitig und um zwei zueinander parallele und zur Achse (A) des Rotormastes (61) senkrechte Achsen einerseits über den Verbindungsbolzen (89c) am oberen Schenkel (88a) des drehfesten Zirkel-Mechanismus (88) und andererseits über den Verbindungsbolzen (89b) am Aufbau (74) des Drehflügelflugzeugs schwenkbar angebracht sind, wobei der Kanal (149) im Bolzen (89c) für die Verbindung mit dem oberen Schenkel (88a) über wenigstens einen internen und longitudinalen Kanal (146), der in wenigstens einer der zwei Stangen (139) des Doppelhebels (88b) vorgesehen ist und selbst mit einem Kanal (143) im Bolzen (89b) für die Verbindung mit dem Aufbau (74) in Verbindung steht und von einem mit dem Aufbau verbundenen Hydraulikblock mit mit hohem Druck beaufschlagten Hydraulikfluid versorgt wird, mit mit hohem Druck beaufschlagten Hydraulikfluid versorgt wird.

19. Vorrichtung zur Anstellwinkelsteuerung gemäß Anspruch 18, dadurch gekennzeichnet, daß die hydraulische Verbindung zwischen dem Hydraulikblock und dem Kanal (143) im Bolzen (89b) für die Verbindung mit dem Aufbau (74) durch wenigstens eine externe Hydraulikleitung (82) gewährleistet wird, die dicht mit wenigstens einem axialen Ende des Verbindungsbolzens (89b) verbunden ist, in den der diesem Bolzen interne Kanal (143) mündet.

20. Vorrichtung zur Anstellwinkelsteuerung gemäß einem der Ansprüche 1 bis 19, dadurch gekennzeichnet, daß jedes der Vorsteuerungs-Betätigungselemente ein monozyklischer, linearer, doppelt wirkender hydraulischer Arbeitszylinder (30) mit wenigstens einem Körper ist, der mit seinem Zylinder (31) mit dem Aufbau (6) des Drehflügelflugzeugs und mit seiner Stange (33) mit der drehfesten Platte (27) verbunden ist und der von wengistens einem drehfesten Servoventil (35) gesteuert wird, das mit dem Zylinder (31) des Arbeitszylinders (30) verbunden ist und über drehfeste Hydraulikleitungen (36a, 36b) mit dem Verbindungs-Hydraulikblock (37), der wenigstens einen Leistungshydraulikkreis des Drehflügelflugzeugs aufweist, verbunden ist.

21. Vorrichtung zur Anstellwinkelsteuerung gemäß einem der Ansprüche 7 bis 20, dadurch gekennzeichnet, daß jeder multizyklische Arbeitszylinder (45) und gegebenenfalls jeder monozyklischer Arbeitszylinder (30) von wenigstens einem Haupt-Leistungshydraulikkreis und einem Hilfs-Hydraulikkreis, die am Drehflügelflugzeug angebracht sind und miteinander durch wenigstens ein automatisches Ventil zum Umschalten zwischen den Kreisen gekoppelt sind, mit Hydraulikfluid versorgt wird und mit festem Bezugspunkt vor dem Einlaß des oder der Hydrauliksammler (40) angebracht ist.

22. Vorrichtung zur Anstellwinkelsteuerung gemäß einem der Ansprüche 7 bis 21, dadurch gekennzeichnet, daß jeder multizyklische Arbeitszylinder ein Zylinder mit Doppelkörper mit zwei tandemartigen Stufen ist, von dem jede Stufe von jeweils einem von zwei entsprechenden Steuerungs-Servoventilen gesteuert wird, von denen wiederum jedes von jeweils einem von zwei übereinander angeordneten Hydrauliksammlern versorgt wird und jeweils mit einem von zwei Haupt-Leistungshydraulikkreisen des Drehflügelflugzeugs in Verbindung steht.

23. Vorrichtung zur Anstellwinkelsteuerung gemäß einem der Ansprüche 1 bis 22, dadurch gekennzeichnet, daß jedes Steuerungs-Servoventil (49) des multizyklischen Arbeitszylinders (45) eines jeden Blattes (7) des Rotors selbst von Befehlen gesteuert wird, die von wenigstens einem elektrischen und/oder optischen Sammler (56), der mit rotierendem Bezugspunkt am Rotormast (1) angebracht ist, ausstehen und die aus Signalen entwickelt werden, die von wenigstens einem Meßwertaufnehmer der Winkelposition des entsprechenden Blattes (7) um die Änderungsachse des Anstellwinkels (X-X) geliefert werden.

## Claims

1. A control device for monocyclic pitch in a fixed reference system and multicyclic pitch in a rotating reference system for the blades (7) of a rotor of a rotor craft, comprising, in order to ensure the control of collective and monocyclic pitch in a fixed reference system, a swashplate (27, 38) assembly comprising :
— a nonrotating plate (27) mounted, on the one hand, so as to slide axially about a fixed cylindrical guide (4), integrally attached to the structure (6) of the rotor craft and substantially surrounding coaxially the rotor mast (1) and, on the other hand, oscillating angularly by means of a universal joint (25) on the axis (A) of the rotor mast (1),
— at least one nonrotating compass (28) articulated, on the one hand, on said structure (6) of the rotor craft and, on the other hand, on said nonrotating plate (27),
— at least three actuators (30), under pilot control, each of which is connected, on the one hand, to said structure (6) of the rotor craft and, on the other hand, to said nonrotating plate (27) in order to control the translation and tilt movements of said nonrotating plate (27) respectively along said guide (4) and on said universal joint (25),
— a rotating plate (38) mounted in rotation by means of at least one bearing (39) on said nonrotating plate (27) and substantially coaxially to the latter,
— at least one rotating compass (41) articulated, on the one hand, on said rotating plate (38) and, on the other hand, on said rotor (1, 2), and
— pitch control rods (44) in a number equal to :he blades (7) of the rotor and each of which is connected, on the one hand, to said rotating plate (38) and, on the other hand, to a pitch control lever (24) of a corresponding blade (7) of the rotor,
the device also comprising, to ensure the multicyclic pitch control in a rotating reference system, multicyclic linear actuators (45), in a number equal to the blades (7) of the rotor, disposed outside the rotor mast (1) and substantially longitudinally with respect to the axis (A) of said rotor mast (1), and mounted so as to rotate with the rotor (1, 2) about said axis (A) such that each multicyclic actuator (45) drives a pitch control rod (44) of a corresponding blade (7) of the rotor, characterised in that the multicyclic linear actuator of each blade (7) is a dual-action hydraulic jack (45) with at least one body implanted on said rotating plate (38) by means of one of the two elements constituted by its cylinder (48) and its rod (46), whilst the other element of the jack (45) is directly articulated on said pitch control rod (44) of the corresponding blade (7), each body of said jack (45) being supplied from at least one hydraulic power circuit by means of at least one electrohydraulic control servovalve (49).

2. The pitch control device as claimed in claim 1, characterised in that each multicyclic jack (45) is integrated via its cylinder (48), into said plate rotating (38) and articulated via its rod (46) to said corresponding pitch control rod (44).

3. The pitch control device as claimed in claim 1, characterised in that each control servovalve (49) of a multicyclic jack (45) is also mounted in a rotating reference system and supported by said rotating plate (38).

4. The pitch control device as claimed in claim 3 characterised in that least one control servovalve (49) of a multicyclic jack (45) is coupled to the cylinder (48) of the multicyclic jack (45) which it controls.

5. The pitch control device as claimed in claim 3, characterised in that at least one control servovalve (49) of a multicyclic jack (45) is integrated into or connected on said rotating plate (38).

6. The pitch control device as claimed in claim 3, characterised in that at least one control servovalve (49) is connected to the multicyclic jack (45) which it controls via hydraulic pipes formed, at least partially, by channels (50a, 50b) pierced in said rotating plate (38).

7. The pitch control device as claimed in claim 1, characterised in that the control servovalves (49) of the multicyclic jacks (45) are supplied with hydraulic fluid from at least one hydraulic power circuit by means of at least one hydraulic collector (40) essentially accommodated in said rotating (38) and nonrotating (27) swashplates.

8. The pitch control device as claimed in claim 7, characterised in that said hydraulic collector (40) is in communication with said control servovalves (49) of the multicyclic jacks (45) via hydraulic pipes (51, 52) formed at least partially by channels (51a, 52a) made in sais rotating plate (38).

9. The pitch control device as claimed in claim 7, characterised in that said hydraulic collector (40) is in communication with at least one hydraulic power circuit of the rotor craft via hydraulic pipes (53, 54) formed at least partially by channels (53a, 54a) made in said nonrotating plate (27), and at least one of which is connected to a high-pressure hydraulic feed and/or low-pressure hydraulic return unit (37) which is fixed on the structure (6) of the rotor craft.

10. The pitch control device as claimed in claim 7, characterised in that said hydraulic collector (40) is annular and inserted between said rotating (38) and nonrotating (27) plates, into at least one of which it is partially integrated.

11. The pitch control device as claimed in claim 10, characterised in that said hydraulic collector (40) is implanted between two bearings (39) axially spaced about the rotor mast (1), and by means of which said rotating plate (38) is mounted in rotation on said nonrotating plate (27).

12. The pitch control device as claimed in claim 10, characterised in that said hydraulic collector (100) is of the type comprising a rotating joint (115) for transferring high-pressure hydraulic fluid between two substantially coaxial parts (87a, 98a), driven in relative rotation one into the other, one (98a) of which is integrally attached in rotation to the rotating plate (98) and the other (87a) of which is integrally attached in rotation to the nonrotating plate (87).

13. The pitch control device as claimed in claim 12, characterised in that said rotating transfer joint (115) comprises two substantially coaxial annular members of revolution (116-117, 188), one (116-117) of which is in radial contact with the nonrotating plate (87) via two static seals (120) axially spaced on either side of a distribution groove (121) of revolution on this member (116-117), and opposite a distribution groove (122) of the nonrotating plate (87), in which emerges at least one channel (113) internal to the latter and in communication with a high-pressure supply pipe, the other member (118) being in radial contact with the rotating plate (98), also via two static seals (124) axially spaced on either side of a distribution groove (125) of revolution on this member (118) and opposite a distribution groove (126) of the rotating plate (98), in which emerges at least one chanel (111) internal to the latter for the high-pressure supply of at least one control servovalve (109) of a multicyclic jack (105), one (118) of the two members surrounding, with a slight radial play (134), an axial part (117) of the other (116-117) and carrying a ring of revolution (119) projecting axially and radially with respect to the member (118) carrying it and engaged with play in a groove of revolution made in the other member (116-117) and forming, opposite the two members and between the latter, radial and coplanar sealing slits extending on either side of a distribution transfer groove of revolution (127) made in the other member (116-117) and in communication with the oter distribution groove (121) of this other member via at least one channel (128) internal to the latter, while the ring (119) is pierced with a transfer channel (129), emerging at one end, opposite said distribution transfer groove (127) and, at the other end, opposite a channel (130-131) pierced in the member (118) carrying the ring (119) and in communication with the other distribution groove (125) of this member.

14. The pitch control device as claimed in claim 7, characterised in that the hydraulic collector (100) comprises a lower end chamber (133) delimited between the rotating (98) and nonrotating (87) plates, for the recovery of the leakage flow from the collector (100) and in which emerges, on the one hand, at least one channel (112) internal to the rotating plate (98) and in communication with the low-pressure return of at least one control servovale (109) of a multicyclic jack (105) and, on the other hand, at least one channel (114a-114b-114c-114d) internal to the nonrotating plate (87) and in communication with a low-pressure return pipe of at least one hydraulic circuit.

15. The pitch control device as claimed in claim 14, characterised in that at least one low-pressure return channel (114a-114b-114c-114d) internal to the nonrotating plate (87) is connected in a leakproof manner to a flexible, large-diameter return conduit (79), external to the nonrotating platte (87) and attaching said nonrotating plate to the hydraulic unit integrally attached to the structure of the rotor craft.

16. The pitch control device as claimed in claim 9, characterised in that at least one channel (113) internal to the nonrotating plate (87) and for supplying the hydraulic collector (100) under high pressure is connected in a leakproof manner to at least one hydraulic circuit by means of at least one channel (143-146-144-152) internal to the nonrotating compass (88).

17. The pitch control device as claimed in claim 16, characterised in that the upper branch of the nonrotating compass (88) is a rod (88a) mounted so as to pivot via one end (138) about a pivot (89c) connecting to the lower branch (88b) of said nonrotating compass (88), the other end (89a) of the rod (88a) being shaped as a spherical pivot articulated in a spherical seating (80) of the nonrotating plate (87), and wherein the rod (88a) is pierced with a longitudinal internal channel (152) in communication, on one side, with a channel (149) internal to the pivot (89c) and supplied with hydraulic fluid under high pressure from at least one hydraulic power circuit, the internal channel (152) of said rod (88a) passing through the spherical pivot (89a), on the other side, and emerging opposite a channel (113c) internal to the nonrotating plate (87) and opening into the base of the spherical seating (80) of said nonrotating plate (87).

18. The pitch control device as claimed in claim 17, characterised in that the lower branch (88b) of the nonrotating compasss (88) is shaped as a double lever, comprising two rods (139) rigidly connected to one another (140) and mounted simultaneously so as to pivot via their ends (141, 142) and about two axes which are parallel to one another and perpendicular to the axis (A) of the rotor mast (61), on one side on the pivot (89c) connecting to the upper branch (88a) of said nonrotating compass (88) and or the other side on a pivot (89b) connecting to the structure (74) of the rotor craft, said channel (149) internal to the pivot (89c) connecting to the upper branch (88a) being supplied with hydraulic fluid under high pressure by at least one internal longitudinal channel (146) made in at least one of the two rods (139) of the double lever (88b) and itself in communication with a channel (143) internal to the pivot (89b) conecting to the stucture (74) and which is supplied with hydraulic fluid under high pressure from the hydraulic unit integrally attached to the structure.

19. The pitch control device as claimed in claim 18, characterised in that the hydraulic connection between said hydraulic unit and said channel (143) internal to the pivot (89b) connecting to the structure (74) is ensured by at least one external hydraulic conduit (82) connected in a leakproof manner to at least one axial end of said connecting pivot (89b) into which emerges the channel (143) internal to this pivot.

20. The pitch control device as claimed in claim 1, characterised in that each of the pilot control actuators is a dual-action, hydraulic linear monocyclic jack (30) with at least one body, which is connected via its cylinder (31) to the structure (6) of the rotor craft, and via its rod (33) to the nonrotating plate (27), and which is controlled by at least one nonrotating servovalve (35) integrally attached to the cylinder (31) of said jack (30) and connected via nonrotating hydraulic conduits (36a, 36b) to said hydraulic unit (37) connecting to at least one hydraulic power circuit of the rotor craft.

21. The pitch control device as claimed in claim 7, characterised in that each multicyclic jack (45) and, if appropriate, each monocyclic jack (30) is supplied with hydraulic fluid from at least one main hydraulic power circuit and from a backup hydraulic circuit which are mounted on the rotor craft and coupled together by at least one automatic valve switching between said circuits, this valve being mounted in a fixed reference system upstream of the hydraulic collector or collectors (40).

22. The pitch control device as claimed in claim 7, characterised in that each multicyclic jack is a doublebody jack with two stages in tandem, each stage of which is controlled by one respectively of two corresponding control servovalves, each of which is supplied by one respectively of two superposed hydraulic collectors and each in communication with one respectively of two main hydraulic power circuits of the rotor craft.

23. The pitch control device as claimed in claim 1, characterised in that each control servovalye (49) of the multicyclic jack (45) of each blade (7) of the rotor is itself controlled by orders originating from at least one electrical and/or optical collector (56) mounted in a rotating reference system in the rotor mast (1) and produced from signals supplied by at least one sensor (55) of the angular position of the corresponding blade (7) about its pitch change axis (X-X).

FIG. 1

FIG. 2

FIG. 3

FIG. 4

FIG. 5